# EUROPEAN PATENT APPLICATION

(11) **EP 4 580 294 A1**
(43) Date of publication of application: **02.07.2025**
(21) Application number: 23870604.8
(22) Date of filing: 22.09.2023
(51) Int. Cl.: H04W 74/00

(54) **RESOURCE INDICATION METHOD AND APPARATUS**

(30) Priority: 30.09.2022 CN 202211216386
(71) Applicant: Huawei Technologies Co., Ltd., Shenzhen, Guangdong 518129 (CN)
(72) Inventor: XUAN, Yidi, Shenzhen, Guangdong 518129 (CN); GUAN, Lei, Shenzhen, Guangdong 518129 (CN); LI, Ruijie, Shenzhen, Guangdong 518129 (CN)
(74) Representative: Epping - Hermann - Fischer
(86) International application number: PCT/CN2023/120538
(87) International publication number: WO 2024/067372

(57) **Abstract**

This application provides a resource indication method and an apparatus, to reduce energy consumption of a network device, and relates to the field of wireless communication technologies. In the method, a terminal device receives first signaling, where the first signaling indicates M PRACH resources. The terminal device receives first indication information, where the first indication information indicates N PRACH resources in the M PRACH resources, M is an integer greater than 1, and N is a positive integer less than or equal to M. The terminal device sends a preamble on a first RO in the N PRACH resources, or sends a preamble on a first RO in (M-N) PRACH resources. Based on this solution, the network device may indicate the M PRACH resources to the terminal device, and indicate the N RPACH resources via the first indication information to the terminal device for random access. Therefore, a quantity of times that a base station sends system information can be reduced, and energy consumption of the base station can be effectively reduced.

## Description

### CROSS-REFERENCE TO RELATED APPLICATIONS

This application claims priority to Chinese Patent Application No. 202211216386.0, filed with the China National Intellectual Property Administration on September 30, 2022 and entitled "RESOURCE INDICATION METHOD AND APPARATUS", which is incorporated herein by reference in its entirety.

### TECHNICAL FIELD

This application relates to the field of wireless communication technologies, and in particular, to a resource indication method and an apparatus.

### BACKGROUND

With the gradual evolution of communication systems, "low carbon" has attracted increasing attention in communication networks. Especially, how to reduce energy consumption of a base station (a network device) has attracted increasing attention. One of main technical means for reducing the energy consumption of the network device is to reduce unnecessary signal sending. For example, when the network device does not send any data information, the network device should not send any signal from a perspective of energy consumption. However, for a terminal device to identify the network device, the network device has to send some always on (always on) signals, for example, an SSB and a message related to system information, for example, SIB1. To ensure that the terminal device can detect an NR carrier and access a network, an existing protocol specifies that a maximum cycle for sending an SSB by the network device is 20 milliseconds (ms). Otherwise, the terminal device may fail to detect the NR network. In addition, SIB1 further includes information necessary for the terminal device to access the network. Therefore, if a cycle for sending SIB1 is long, the terminal device needs to wait for a long time to access the network. This also reduces experience of the terminal device. Therefore, how to reduce overheads of an always on signal, to reduce energy consumption of a network device without affecting experience of a terminal device is a problem that is being resolved by researchers in the art.

Currently, it is proposed that, through adjusting of a physical random access channel (physical random access channel, PRACH) resource, when load is zero/low, a base station performs blind detection for a preamble on a PRACH resource that is sparse in time domain, and when load is medium/high, the base station performs blind detection for a preamble on a PRACH resource that is dense in time domain, to reduce energy consumption of the base station in a zero/low load case. However, the base station needs to notify a terminal of a change of the PRACH resource by updating system information. However, due to frequent update of the system information, the base station needs to frequently send the system information, and the terminal also needs to frequently receive the system information. Therefore, a more lightweight random access resource update mechanism needs to be studied.

### SUMMARY

This application provides a resource indication method and an apparatus, to reduce energy consumption of a network device.

According to a first aspect, a resource indication method is provided. The method may be performed by a terminal device or a chip/chip system. In the method, the terminal device receives first signaling, where the first signaling indicates M PRACH resources. The terminal device receives first indication information, where the first indication information indicates N PRACH resources in the M PRACH resources, M is an integer greater than 1, and N is a positive integer less than or equal to M. The terminal device sends a preamble on a first RO in the N PRACH resources, or sends a preamble on a first RO in (M-N) PRACH resources.

Based on this solution, a network device may indicate the M PRACH resources to the terminal device, and indicate the N RPACH resources via the first indication information to the terminal device for random access. Therefore, a quantity of times that a base station sends system information can be reduced, and energy consumption of the base station can be effectively reduced. In a possible implementation, the M PRACH resources include a first PRACH resource and one or more second PRACH resources. The first indication information indicates the N PRACH resources in the first PRACH resource and the one or more second PRACH resources, where N is 1. The first RO is one of ROs included in the N PRACH resources.

Based on this solution, the network device may indicate the first PRACH resource and the one or more second PRACH resources to the terminal device, and indicate the N PRACH resources via the first indication information to the terminal device for random access. This can reduce a quantity of times that a base station sends system information because of updating a PRACH resource, and effectively reduce energy consumption of the base station.

In a possible implementation, the M PRACH resources include a first PRACH resource and one or more second PRACH resources. The first indication information indicates to activate a third PRACH resource in the one or more second PRACH resources. The N PRACH resources are the third PRACH resource and the first PRACH resource. The first RO is one of an RO included in the third PRACH resource and an RO included in the first PRACH resource.

Based on this solution, the network device may indicate the first PRACH resource and the one or more second PRACH resources to the terminal device, and activate the third PRACH resource via the first indication information to the terminal device for random access on the first PRACH resource and the third PRACH resource. This can reduce a quantity of times that the base station sends system information because of updating a PRACH resource, and effectively reduce energy consumption of the base station.

In a possible implementation, the N first PRACH resources and one or more second PRACH resources. The first indication information indicates to deactivate the one or more second PRACH resources, and the N PRACH resources are the one or more second PRACH resources. The first RO is one of one or more ROs included in the first PRACH resource.

Based on this solution, the network device may indicate the first PRACH resource and the one or more second PRACH resources to the terminal device, and deactivate the second PRACH resources via the first indication information to the terminal device for random access on the first PRACH resource. This can reduce a quantity of times that the base station sends system information because of updating a PRACH resource, and effectively reduce energy consumption of the base station.

In a possible implementation, the terminal device receives first information, where the first information indicates a first preamble set. The first preamble set is used by a first terminal device to send one or more preambles on the first PRACH resource, the first preamble set is different from a second preamble set, and the second preamble set is used by the first terminal device to send one or more preambles on the second PRACH resources.

In a possible implementation, the second preamble set is used by the first terminal device to send one or more preambles on a PRACH resource that is in the second PRACH resources and that does not overlap the first PRACH resource.

Based on this solution, the first preamble set may be used by the first terminal device for sending, and a second terminal device different from the first terminal device can send a preamble only on the first PRACH resource. Therefore, if a set of preambles used by the first terminal device on the first PRACH resource is not limited, a probability of a conflict between the first terminal device and the second terminal device during preamble selection is greatly increased. Therefore, the first information is used to configure the first terminal device to use the preambles in the first preamble set only on the first PRACH resource, so that occupation of a preamble resource of the second terminal device can be reduced.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

In a possible implementation, configuration information of the first indication information is carried in the first signaling. Based on this solution, the configuration information of the first indication information is indicated based on the first signaling, so that the terminal device can receive the first indication information based on the configuration information. Because the configuration information of the first indication information does not need to be sent to the terminal device based on separate signaling, air interface resources can be reduced, and energy consumption of the network device can be reduced.

In a possible implementation, the terminal device receives third information, where the third information indicates a resource for carrying the first indication information. Based on this solution, the third information indicates a resource of the first indication information, so that the terminal device can receive the first indication information based on the third information.

In a possible implementation, the terminal device receives fourth information, where the fourth information indicates a quantity of repetition times of the first indication information. Based on this solution, the fourth information indicates the quantity of repetition times of the first indication information, so that a possibility that the terminal device successfully receives the first indication information is increased. This ensures that even a terminal device in a poor coverage condition can correctly obtain the first indication information, and correctly learn of a change of a PRACH resource.

According to a second aspect, a resource indication method is provided. The method may be performed by a terminal device or a chip/chip system. In the method, a terminal device receives first signaling, where the first signaling indicates a first PRACH resource, the first PRACH resource includes a plurality of parameters, and the plurality of parameters include a first value of a first parameter. The terminal device receives first indication information, where the first indication information indicates a second value of the first parameter. The terminal device determines a second PRACH resource based on the first PRACH resource and the second value of the first parameter, and sends a preamble on a first RO in the second PRACH resource.

Based on this solution, a network device may indicate the first value of the first parameter of the first PRACH resource based on the first signaling, and indicate the second value of the first parameter based on the first indication information. Therefore, a quantity of times that the network device sends system information because of updating a PRACH resource can be reduced, and energy consumption of the network device can be effectively reduced.

In a possible implementation, the first RO is one of one or more ROs included in the second PRACH resource.

In a possible implementation, the first parameter includes a cycle. Based on this solution, the network device may indicate a second value of the cycle of the first PRACH resource based on the first indication information, that is, may indicate, to the terminal device through the first PRACH resource, a PRACH resource that is more dense in time domain or more sparse in time domain than the first PRACH resource, to perform random access.

In a possible implementation, the second value is not greater than the first value. Based on this solution, the second value is not greater than the first value, that is, the second PRACH resource is more dense in time domain than the first PRACH resource.

In a possible implementation, a value of an association period (association period) of the first PRACH resource is 1, and a value of an association period (association period) of the second PRACH resource is 1. When association periods of the first PRACH resource and the second PRACH resource are 1, different terminal devices map a same SSB to an overlapped PRACH resource in the first PRACH resource and the second PRACH resource, so that complexity of the network device can be reduced.

In a possible implementation, G SSBs are determined, where G is an integer greater than or equal to 1. The G SSBs are mapped to a third PRACH resource in a first association period in a first mapping order. The G SSBs are mapped to a fourth PRACH resource in the first association period in a second mapping order. The third PRACH resource and the fourth PRACH resource belong to the second PRACH resource, and the third PRACH resource and the fourth PRACH resource do not overlap. The first association period is the association period corresponding to the first PRACH resource.

In a possible implementation, the third PRACH resource is an overlapped resource in the first PRACH resource and the second PRACH resource, and the fourth PRACH resource is a resource other than the third PRACH resource in the second PRACH resource.

Based on this solution, different terminal devices map a same SSB to an overlapped PRACH resource in the first PRACH resource and the second PRACH resource, so that complexity of the network device can be reduced.

In a possible implementation, the terminal device receives first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

Based on this solution, the first preamble set may be used by the first terminal device for sending, and a second terminal device different from the first terminal device can send a preamble only on the first PRACH resource. Therefore, if a set of preambles used by the first terminal device on the first PRACH resource is not limited, a probability of a conflict between the first terminal device and the second terminal device during preamble selection is greatly increased. Therefore, the first information is used to configure the first terminal device to use the preambles in the first preamble set only on the first PRACH resource, so that occupation of a preamble resource of the second terminal device can be reduced.

According to a third aspect, a resource indication method is provided. The method may be performed by a network device or a chip/chip system. In the method, the network device sends first signaling, where the first signaling indicates M physical random access channel PRACH resources. The network device sends first indication information, where the first indication information indicates N PRACH resources in the M PRACH resources, M is an integer greater than 1, and N is a positive integer less than or equal to M. The network device receives a preamble on a first RO in the N PRACH resources, or receives a preamble on a first RO in (M-N) PRACH resources.

In a possible implementation, the M PRACH resources include a first PRACH resource and one or more second PRACH resources. The first indication information indicates the N PRACH resources in the first PRACH resource and the one or more second PRACH resources, where N is 1. The first RO is one of ROs included in the N PRACH resources.

In a possible implementation, the M PRACH resources include a first PRACH resource and one or more second PRACH resources. The first indication information indicates to activate a third PRACH resource in the one or more second PRACH resources. The N PRACH resources are the third PRACH resource and the first PRACH resource. The first RO is one of an RO included in the third PRACH resource and an RO included in the first PRACH resource.

In a possible implementation, the N first PRACH resources and one or more second PRACH resources. The first indication information indicates to deactivate the one or more second PRACH resources, and the N PRACH resources are the one or more second PRACH resources. The first RO is one of one or more ROs included in the first PRACH resource.

In a possible implementation, the network device sends first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on the second PRACH resources.

In a possible implementation, the second preamble set is used by the first terminal device to send one or more preambles on a PRACH resource that is in the second PRACH resources and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

In a possible implementation, configuration information of the first indication information is carried in the first signaling.

In a possible implementation, the network device sends third information, where the third information indicates a resource for carrying the first indication information.

In a possible implementation, the network device sends fourth information, where the fourth information indicates a quantity of repetition times of the first indication information.

According to a fourth aspect, a resource indication method is provided. The method may be performed by a network device or a chip/chip system. In the method, the network device sends first signaling, where the first signaling indicates a first PRACH resource, the first PRACH resource includes a plurality of parameters, and the plurality of parameters include a first value of a first parameter. The network device sends first indication information, where the first indication information indicates a second value of the first parameter. The network device determines a second PRACH resource based on the first PRACH resource and the second value of the first parameter. The network device sends a preamble on a first RO in the second PRACH resource. In a possible implementation, the first RO is one of one or more ROs included in the second PRACH resource.

In a possible implementation, the first parameter includes a cycle.

In a possible implementation, the second value is not greater than the first value.

In a possible implementation, a value of an association period (association period) of the first PRACH resource is 1, and a value of an association period (association period) of the second PRACH resource is 1.

In a possible implementation, the network device sends first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

According to a fifth aspect, a communication apparatus is provided, and includes a processing unit and a transceiver unit.

The transceiver unit is configured to receive first signaling, where the first signaling indicates M PRACH resources. The transceiver unit is further configured to receive first indication information, where the first indication information indicates N PRACH resources in the M PRACH resources, M is an integer greater than 1, and N is a positive integer less than or equal to M. The processing unit is configured to determine the N PRACH resources based on the first indication information. The transceiver unit is further configured to send a preamble on a first RO in the N PRACH resources, or send a preamble on a first RO in (M-N) PRACH resources.

In a possible implementation, the M PRACH resources include a first PRACH resource and one or more second PRACH resources. The first indication information indicates the N PRACH resources in the first PRACH resource and the one or more second PRACH resources, where N is 1. The first RO is one of ROs included in the N PRACH resources.

In a possible implementation, the M PRACH resources include a first PRACH resource and one or more second PRACH resources. The first indication information indicates to activate a third PRACH resource in the one or more second PRACH resources. The N PRACH resources are the third PRACH resource and the first PRACH resource. The first RO is one of an RO included in the third PRACH resource and an RO included in the first PRACH resource.

In a possible implementation, the N first PRACH resources and the one or more second PRACH resources. The first indication information indicates to deactivate the one or more second PRACH resources, and the N PRACH resources are the one or more second PRACH resources. The first RO is one of one or more ROs included in the first PRACH resource.

In a possible implementation, the transceiver unit is further configured to receive first information, where the first information indicates a first preamble set. The first preamble set is used by a first terminal device to send one or more preambles on the first PRACH resource, the first preamble set is different from a second preamble set, and the second preamble set is used by the first terminal device to send one or more preambles on the second PRACH resources.

In a possible implementation, the second preamble set is used by the first terminal device to send one or more preambles on a PRACH resource that is in the second PRACH resources and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

In a possible implementation, configuration information of the first indication information is carried in the first signaling.

In a possible implementation, the transceiver unit is further configured to receive third information, where the third information indicates a resource for carrying the first indication information.

In a possible implementation, the transceiver unit is further configured to receive fourth information, where the fourth information indicates a quantity of repetition times of the first indication information.

According to a sixth aspect, a communication apparatus is provided, and includes a processing unit and a transceiver unit.

The transceiver unit is configured to receive first signaling, where the first signaling indicates a first PRACH resource, the first PRACH resource includes a plurality of parameters, and the plurality of parameters include a first value of a first parameter. The transceiver unit is further configured to receive first indication information, where the first indication information indicates a second value of the first parameter. The processing unit is configured to determine a second PRACH resource based on the first PRACH resource and the second value of the first parameter. The transceiver unit is further configured to send a preamble on a first RO in the second PRACH resource.

In a possible implementation, the first RO is one of one or more ROs included in the second PRACH resource.

In a possible implementation, the first parameter includes a cycle.

In a possible implementation, the second value is not greater than the first value.

In a possible implementation, a value of an association period (association period) of the first PRACH resource is 1, and a value of an association period (association period) of the second PRACH resource is 1.

In a possible implementation, the processing unit is further configured to determine G SSBs, where G is an integer greater than or equal to 1. The processing unit is further configured to map the G SSBs to a third PRACH resource in a first association period in a first mapping order. The processing unit is further configured to map the G SSBs to a fourth PRACH resource in the first association period in a second mapping order. The third PRACH resource and the fourth PRACH resource belong to the second PRACH resource, and the third PRACH resource and the fourth PRACH resource do not overlap. The first association period is the association period corresponding to the first PRACH resource.

In a possible implementation, the third PRACH resource is an overlapped resource in the first PRACH resource and the second PRACH resource, and the fourth PRACH resource is a resource other than the third PRACH resource in the second PRACH resource.

In a possible implementation, the transceiver unit is further configured to receive first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

According to a seventh aspect, a communication apparatus is provided, and includes a processing unit and a transceiver unit.

The transceiver unit is configured to send first signaling, where the first signaling indicates M physical random access channel PRACH resources. The processing unit is configured to determine N PRACH resources. The transceiver unit is further configured to send first indication information, where the first indication information indicates the N PRACH resources in the M PRACH resources, M is an integer greater than 1, and N is a positive integer less than or equal to M. The transceiver unit is further configured to receive a preamble on a first RO in the N PRACH resources, or receive a preamble on a first RO in (M-N) PRACH resources.

In a possible implementation, the M PRACH resources include a first PRACH resource and one or more second PRACH resources. The first indication information indicates the N PRACH resources in the first PRACH resource and the one or more second PRACH resources, where N is 1. The first RO is one of ROs included in the N PRACH resources.

In a possible implementation, the M PRACH resources include a first PRACH resource and one or more second PRACH resources. The first indication information indicates to activate a third PRACH resource in the one or more second PRACH resources. The N PRACH resources are the third PRACH resource and the first PRACH resource. The first RO is one of an RO included in the third PRACH resource and an RO included in the first PRACH resource.

In a possible implementation, the N first PRACH resources and the one or more second PRACH resources. The first indication information indicates to deactivate the one or more second PRACH resources, and the N PRACH resources are the one or more second PRACH resources. The first RO is one of one or more ROs included in the first PRACH resource.

In a possible implementation, the transceiver unit is further configured to send first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on the second PRACH resources.

In a possible implementation, the second preamble set is used by the first terminal device to send one or more preambles on a PRACH resource that is in the second PRACH resources and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

In a possible implementation, configuration information of the first indication information is carried in the first signaling.

In a possible implementation, the transceiver unit is further configured to send third information, where the third information indicates a resource for carrying the first indication information.

In a possible implementation, the transceiver unit is further configured to send fourth information, where the fourth information indicates a quantity of repetition times of the first indication information.

According to an eighth aspect, a communication apparatus is provided, and includes a processing unit and a transceiver unit.

The transceiver unit is configured to send first signaling, where the first signaling indicates a first PRACH resource, the first PRACH resource includes a plurality of parameters, and the plurality of parameters include a first value of a first parameter. The transceiver unit is further configured to send first indication information, where the first indication information indicates a second value of the first parameter. The processing unit is configured to determine a second PRACH resource based on the first PRACH resource and the second value of the first parameter. The transceiver unit is further configured to send a preamble on a first RO in the second PRACH resource.

In a possible implementation, the first RO is one of one or more ROs included in the second PRACH resource.

In a possible implementation, the first parameter includes a cycle.

In a possible implementation, the second value is not greater than the first value.

In a possible implementation, a value of an association period (association period) of the first PRACH resource is 1, and a value of an association period (association period) of the second PRACH resource is 1.

In a possible implementation, the transceiver unit is further configured to send first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

In a possible implementation, the first terminal device meets any one or more of the following conditions: The first terminal device has a capability of receiving the first indication information. The first terminal device has a capability of parsing the first signaling. One or more second PRACH resources are configured for the first terminal device.

According to a ninth aspect, a communication apparatus is provided. The communication apparatus may be the communication apparatus according to any one of the possible implementations of the fifth aspect to the eighth aspect in the foregoing embodiments, or a chip disposed in the communication apparatus according to any one of the fifth aspect to the eighth aspect. The communication apparatus includes a communication interface and a processor, and optionally, further includes a memory. The memory is configured to store a computer program, instructions, or data. The processor is coupled to the memory and the communication interface. When the processor reads the computer program, the instructions, or the data, the communication apparatus is enabled to perform the method performed by the terminal device in any one of the possible implementations of the first aspect or the second aspect, or the communication apparatus is enabled to perform the method performed by the network device in any one of the possible implementations of the third aspect or the fourth aspect.

It should be understood that the communication interface may be implemented by using an antenna, a feeder, a codec, and the like in the communication apparatus. Alternatively, if the communication apparatus is a chip disposed in a network device or a terminal device, the communication interface may be an input/output interface of the chip, for example, an input/output pin. The communication apparatus may further include a transceiver, used by the communication apparatus to communicate with another device.

According to a tenth aspect, an embodiment of this application provides a chip system. The chip system includes a processor, configured to implement the method shown in any one of the possible implementations of the first aspect to the fourth aspect, and may further include a memory. In a possible implementation, the chip system further includes a memory, configured to store program instructions and/or data. The chip system may include a chip, or may include a chip and another discrete component.

According to an eleventh aspect, this application provides a computer-readable storage medium. The computer-readable storage medium stores a computer program or instructions. When the computer program or the instructions are run, the methods performed by the terminal device or the network device in the foregoing aspects are implemented.

According to a twelfth aspect, a computer program product is provided. The computer program product includes computer program code or instructions. When the computer program code or the instructions are run, the methods performed by the terminal device or the network device in the foregoing aspects are performed.

According to a thirteenth aspect, a communication apparatus is provided. The communication apparatus includes units or modules configured to perform the methods in the foregoing aspects. According to a fourteenth aspect, a chip system is provided, and includes a logic circuit and an input/output interface. The logic circuit is configured to perform the method performed by the terminal device or the network device. The input/output interface is configured to communicate with another apparatus.

For beneficial effect of the third aspect to the fourteenth aspect and the implementations thereof, refer to the descriptions of the beneficial effect of the methods according to the first aspect and the second aspect and the implementations thereof.

According to a fifteenth aspect, a communication method is provided, and includes: A network device sends first signaling, and a terminal device receives the first signaling, where the first signaling indicates M PRACH resources. The terminal device receives first indication information, where the first indication information indicates N PRACH resources in the M PRACH resources, M is an integer greater than 1, and N is a positive integer less than or equal to M. The terminal device sends a preamble on a first RO in the N PRACH resources, and the network device receives the preamble on the first RO in the N PRACH resources. Alternatively, the terminal device sends a preamble on a first RO in (M-N) PRACH resources, and the network device receives the preamble on the first RO in the (M-N) PRACH resources.

### BRIEF DESCRIPTION OF DRAWINGS

FIG. 1 is an example flowchart of random access;
FIG. 2 is a diagram of a mapping relationship between an SSB and an RO;
FIG. 3 is a diagram of another mapping relationship between an SSB and an RO;
FIG. 4 is a diagram of still another mapping relationship between an SSB and an RO;
FIG. 5 is a diagram of a correspondence between a preamble and a random access type;
FIG. 6 is a diagram of a communication system according to an embodiment of this application;
FIG. 7 is an example flowchart of a resource indication method according to an embodiment of this application;
FIG. 8 is a diagram of a mapping relationship between an RO and an SSB according to an embodiment of this application;
FIG. 9 is a diagram of a first PRACH resource and a second PRACH resource according to an embodiment of this application;
FIG. 10 is an example flowchart of another resource indication method according to an embodiment of this application;
FIG. 11 is an example flowchart of still another resource indication method according to an embodiment of this application;
FIG. 12 is another diagram of a first PRACH resource and a second PRACH resource according to an embodiment of this application;
FIG. 13 is a diagram of PRACH resources of a first terminal and a second terminal according to an embodiment of this application;
FIG. 14 is a diagram of a mapping relationship between ROs and SSBs of a first terminal and a second terminal according to an embodiment of this application;
FIG. 15 is a diagram of another mapping relationship between ROs and SSBs of a first terminal and a second terminal according to an embodiment of this application;
FIG. 16 is a diagram of still another mapping relationship between ROs and SSBs of a first terminal and a second terminal according to an embodiment of this application;
FIG. 17 is a diagram of a communication apparatus according to an embodiment of this application;
FIG. 18 is a diagram of another communication apparatus according to an embodiment of this application;
FIG. 19 is a diagram of still another communication apparatus according to an embodiment of this application; and
FIG. 20 is a diagram of yet another communication apparatus according to an embodiment of this application.

### DESCRIPTION OF EMBODIMENTS

For ease of understanding the technical solutions provided in embodiments of this application, the following describes a random access process of a terminal device.

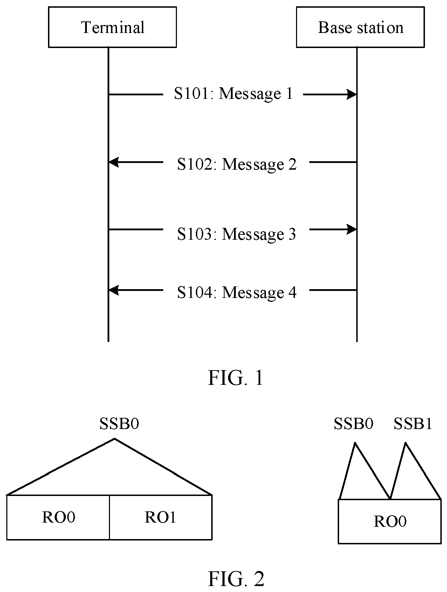

FIG. 1 is an example flowchart of random access, and the following operations may be included. S101: A terminal device sends a message 1 (message 1, Msg1) to a network device.

The terminal device may send the Msg1 to the network device on a physical random access channel (physical random access channel, PRACH) resource. The Msg1 may carry a preamble. The terminal device may receive a plurality of SSBs from the network device. The terminal device may detect power of the plurality of SSBs, and select an SSB with largest power from the plurality of SSBs. The terminal device may randomly select an RO based on a random access channel occasion (random access channel occasion, RO) associated with an index of the SSB with largest power, for sending a preamble (preamble). In the foregoing description, the RO may be understood as a time-frequency resource for random access. An association relationship between an index of an SSB and an RO may be preconfigured by the network device. The random access channel occasion (RACH occasion) may also be referred to as a physical random access channel occasion (PRACH occasion).

In an example, a maximum of 64 preambles can be transmitted simultaneously on one RO. The terminal device may select one preamble from the 64 preambles, that is, the preamble carried in the Msg1.

S102: The network device sends a message 2 (message 2, Msg2) to the terminal device.

The Msg2 is also referred to as random access response (random access response, RAR) information. The RAR information may indicate scheduling information of a message 3 (message 3, Msg3), namely, RAR uplink grant (RAR UL grant) information. The scheduling information may indicate a time-frequency resource of the Msg3.

S103: The terminal device sends the message 3 (Msg3) to the network device.

The terminal device may send the Msg3 to the network device through a physical uplink shared channel (physical uplink shared channel, PUSCH). The terminal device may send the Msg3 on the time-frequency resource indicated by the Msg2.

S104: The network device sends a message 4 (Msg4) to the terminal device.

The Msg4 is mainly used for conflict resolution. When a plurality of terminal devices simultaneously performs access, a terminal device that is selected for the random access needs to be determined. For example, the Msg4 may include a terminal device identifier, to indicate that a terminal device corresponding to the terminal device identifier successfully performs random access.

In S101, the terminal device may send the Msg1 to the network device through a PRACH. The PRACH resource may be configured by the network device. For example, the network device periodically configures a PRACH resource (a PRACH cycle, which may also be referred to as a PRACH configuration period (PRACH configuration period), where the PRACH resource is configured in time domain in a unit cycle of the PRACH configuration period) in one PRACH configuration period in time domain, and a PRACH resource in one PRACH cycle may include one or more ROs. In an existing communication system, the network device indicates a PRACH resource to the terminal device based on higher-layer signaling (for example, the higher-layer signaling is SIB1), for example, indicates the PRACH resource based on a parameter PRACH configuration index (prach-ConfigurationIndex) in SIB1. The terminal device may determine, based on an index value indicated by the PRACH configuration index, the PRACH resource from a random access configuration index table (for example, the random access configuration index table may be one of a plurality of random access configuration index tables in the 3GPP standard TS 38.211) stored in the terminal device.

In the foregoing description, the index value indicated by the PRACH configuration index (prach-ConfigurationIndex) may correspond to a PRACH cycle, a preamble type, and a random access channel occasion (RACH occasion, RO) pattern in the PRACH cycle. For example, the PRACH configuration index (prach-ConfigurationIndex) indicates that the index value is 67, and the terminal device currently works at a time division duplexing (rime division duplexing, TDD) frequency band of a frequency 1 (frequency 1, FR1). The terminal device may perform table lookup based on the index value 67, to determine that the preamble type is a type A1 and the PRACH cycle is 160 ms (the PRACH cycle = 16 x 10 ms, and a length of a frame is 10 ms). The terminal device may further determine to configure an RO in a subframe 9 in a frame 1 (y = 1) in one PRACH cycle. The subframe 9 includes two PRACH slots, each PRACH slot includes six ROs, duration of each RO is two OFDM symbols, and ROs are arranged in each slot starting from an OFDM symbol 0.

In addition, it should be further noted that, in the process of transmitting the Msg1, as described above, the terminal device selects one RO based on an index of the SSB to transmit the preamble. In an existing new radio (new radio, NR) standard, before sending the msg1, the terminal device may learn of, based on higher-layer signaling (for example, the higher-layer signaling is a system information block 1, and a higher-layer parameter ssb-PositionsInBurst in the system information block 1 indicates G SSBs sent by the network device in one SSB burst set), the G SSBs sent by the network device (or learn of indexes of one or more SSBs sent by the network device), and may learn of a mapping pattern from the G SSBs to a plurality of ROs in the PRACH resource based on higher-layer signaling (for example, SIB1).

The network device may specify an association relationship between X SSBs and one RO based on a higher-layer parameter. Further, the terminal device may associate the X SSBs with the one RO based on the higher-layer parameter. For example, one SSB may be associated with a plurality of ROs, or a plurality of SSBs may be associated with one RO. For example, the network device may configure, based on a higher-layer parameter (for example, a higher-layer parameter ssb-perRACH-OccasionAndCB-PreamblesPerSSB (ssb-perRACH-OccasioGAGdCB-PreamblesPerSSB)), a quantity X of SSBs mapped to one RO. When X is less than 1, one SSB is associated with 1/X ROs. When X is greater than 1, X SSBs are associated with one RO, that is, one SSB is associated with 1/X RO.

For example, refer to FIG. 2. When X = 1/2, one SSB is associated with two ROs. When X = 2, one RO is associated with two SSBs. Therefore, when an index of one SSB is associated with a plurality of ROs, the terminal selects one of the plurality of ROs, and selects a preamble transmitted on the RO.

After determining the association relationship between the one RO and the X SSBs, the terminal device may determine the mapping pattern from the G SSBs to the plurality of ROs in the PRACH resource. In other words, after determining the association relationship between the one RO and the X SSBs, the terminal device maps the G SSBs to the plurality of ROs in the PRACH in a preset order based on the association relationship between the one RO and the X SSBs (which may be understood as that the terminal device determines the mapping pattern from the G SSBs to the plurality of ROs in the PRACH resource). The preset order is as follows: The G SSBs are mapped to the plurality of ROs in the PRACH resource in an order of code domain, frequency domain, and time domain. First, mapping is performed in an RO in ascending order of preamble indexes. One RO may be associated with a plurality of SSBs, the plurality of SSBs are associated with different preambles in the one RO, an SSB with a small index is associated with a preamble with a small index, and an SSB with a large index is associated with a preamble with a large index. Therefore, mapping from the SSBs to the RO is first arranged in ascending order of preamble indexes in one RO. Then, mapping is performed in ascending order of frequency domain resource indexes of frequency division multiplexed ROs. A plurality of ROs may be frequency division multiplexed. Therefore, mapping from an SSB to an RO is arranged in ascending order of frequency domain resources. Then, mapping is performed in ascending order of time domain resource indexes of time division multiplexed ROs in a PRACH slot. One PRACH slot may include a plurality of time division multiplexed ROs. Therefore, mapping from an SSB to an RO is arranged in ascending order of time domain resource indexes in one PRACH slot. Finally, mapping is performed in ascending order of PRACH slot indexes.

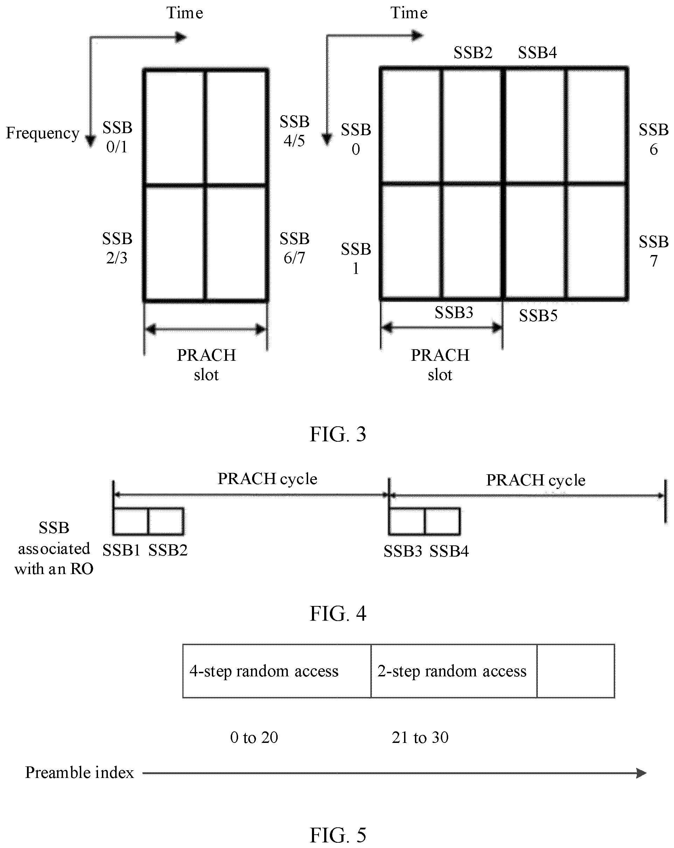

For example, refer to FIG. 3. Each grid represents one RO. In the figure on the left, eight SSBs are configured in total, two SSBs are associated with one RO, one PRACH slot includes two ROs in time domain, and two ROs are frequency division multiplexed in frequency domain. In this case, the SSBs are mapped in an order of code domain, frequency domain, and time domain, with a mapping pattern shown in the figure on the left. In the figure on the right, eight SSBs are configured, one SSB is associated with one RO, one PRACH slot includes two ROs in time domain, there are two PRACH slots in total, and the two ROs are frequency division multiplexed in frequency domain. In this case, the SSBs are mapped in an order of code domain, frequency domain, and time domain, with a mapping pattern shown in the figure on the right.

In addition, it should be further noted that mapping from the G SSBs to the RO corresponds to one association period (association period). The association period is L, and a time domain length of the association period is a time length of L PRACH cycles or a time length of L PRACH configuration periods, where L is a minimum value that meets a preset condition in a preset set. The preset set is one of a plurality of values corresponding to the PRACH cycle. For example, if the PRACH cycle is 10 ms, a corresponding preset set may be {1, 2, 4, 8, 16}. If the PRACH cycle is 20 ms, a corresponding preset set may be {1, 2, 4, 8}. If the PRACH cycle is 40 ms, a corresponding preset set may be {1, 2, 4}. If the PRACH cycle is 80 ms, a corresponding preset set may be {1, 2}. If the PRACH cycle is 160 ms, a corresponding preset set may be {1}. The preset condition may include: In a time domain length (the L PRACH cycles) of the association period, the G SSBs are mapped to the RO at least once. For example, refer to FIG. 4. Each grid represents one RO. In one PRACH cycle, a PRACH resource includes two ROs, four SSBs are configured for a higher-layer parameter, and each SSB is associated with one RO. In this case, at least L = 2 PRACH cycles are required to complete mapping of the four SSBs to ROs at one time. Therefore, a time domain length of an association period is 2 x a time domain length of the PRACH cycle, that is, the association period is 2.

In addition, in an existing standard, procedures performed by terminal devices that send different preambles or types of the terminal devices may be identified based on the preambles. For example, whether the terminal devices perform 4-step random access or 2-step random access is distinguished based on a sent preamble. Different types of terminal devices separately configure a preamble set on a same RO. For example, one RO corresponds to 64 preambles numbered from 0 to 63. A terminal device performing contention-based random access (contention-based random access, CBRA) is configured to use only preambles numbered from 0 to 20, and a terminal device performing contention free-based random access (contention free-based random access, CFRA) is configured to use only a sequence of preambles numbered from 21 to 40. The network device determines, by identifying a set to which a preamble sent by a terminal device belongs, a procedure performed by the terminal device. Preamble sets of all types of terminal devices do not intersect. For example, an example in which a terminal device performing 4-step random access and a terminal device performing 2-step random access are identified based on sent preambles is used for description. Refer to FIG. 5. The terminal device performing 4-step random access and the terminal device performing 2-step random access each send a preamble on an RO 0. The network device configures the terminal device performing 4-step random access to use a preamble 0 to a preamble 20, and configures the terminal device performing 2-step random access to use a preamble 21 to a preamble 30. A terminal device randomly selects one preamble from a corresponding preamble set based on an access type of the terminal device for sending the preamble, and the network device may determine whether the terminal device performs 4-step random access or 2-step random access based on the preamble sent by the terminal device.

The technical solutions provided in embodiments of this application are described below with reference to the accompanying drawings.

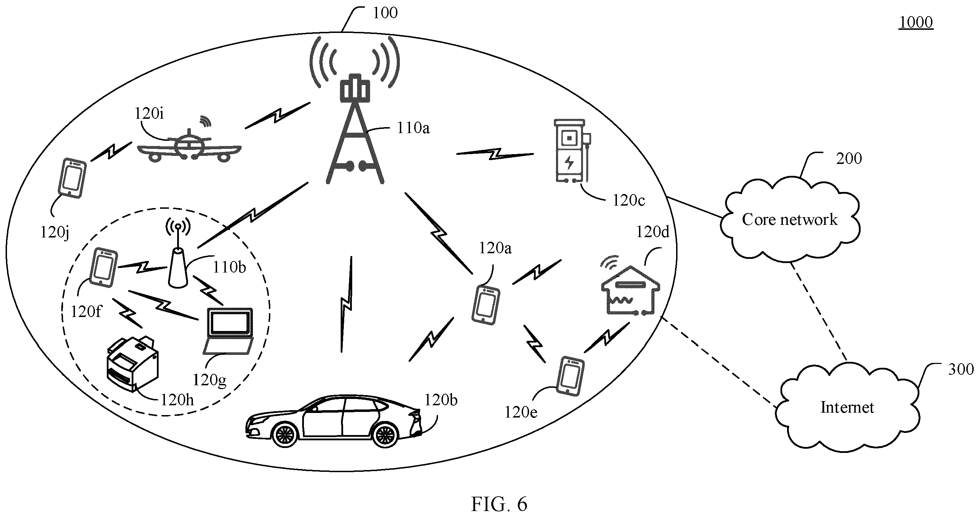

FIG. 6 is a diagram of an architecture of a communication system 1000 to which embodiments of this application are applied. As shown in FIG. 6, the communication system includes a radio access network 100 and a core network 200. Optionally, the communication system 1000 may further include an internet 300. The radio access network 100 may include at least one radio access network device (for example, 110a and 110b in FIG. 6), and may further include at least one terminal (for example, 120a to 120j in FIG. 6). A terminal is connected to a radio access network device in a wireless manner, and the radio access network device is connected to the core network in a wireless or wired manner. A core network device and the radio access network device may be independent and different physical devices, or functions of the core network device and logical functions of the radio access network device are integrated into a same physical device, or some functions of the core network device and some functions of the radio access network device are integrated into one physical device. A wired or wireless manner may be used for connection between terminals and between radio access network devices. FIG. 6 is only a diagram. The communication system may further include another network device, for example, may further include a wireless relay device and a wireless backhaul device. This is not shown in FIG. 6.

The radio access network device may be a base station (base station), an evolved NodeB (evolved NodeB, eNodeB), a transmission reception point (transmission reception point, TRP), a next generation NodeB (next generation NodeB, gNB) in a 5th generation (5th generation, 5G) mobile communication system, a next generation base station in a 6th generation (6th generation, 6G) mobile communication system, a base station in a future mobile communication system, an access node in a Wi-Fi system, or the like; or may be a module or a unit that completes some functions of the base station, for example, may be a central unit (central unit, CU), or may be a distributed unit (distributed unit, DU). The CU herein completes functions of the radio resource control protocol and the packet data convergence protocol (packet data convergence protocol, PDCP) of the base station, and may further complete functions of the service data adaptation protocol (service data adaptation protocol, SDAP). The DU completes functions of a radio link control layer and a medium access control (medium access control, MAC) layer of the base station, and may further complete functions of a part or all of a physical layer. For specific descriptions of the foregoing protocol layers, refer to technical specifications related to the 3rd generation partnership project (3rd generation partnership project, 3GPP). The radio access network device may be a macro base station (for example, 110a in FIG. 6), may be a micro base station or an indoor base station (for example, 110b in FIG. 6), or may be a relay node or a donor node. A specific technology and a specific device form that are used by the radio access network device are not limited in embodiments of this application. For ease of description, the following provides descriptions by using an example in which a base station is used as a radio access network device.

The terminal may alternatively be referred to as a terminal device, user equipment (user equipment, UE), a mobile station, a mobile terminal, or the like. The terminal may be widely used in various scenarios, for example, device-to-device (device-to-device, D2D), vehicle to everything (vehicle to everything, V2X) communication, machine-type communication (machine-type communication, MTC), internet of things (internet of things, IOT), virtual reality, augmented reality, industrial control, autonomous driving, telemedicine, a smart grid, smart furniture, a smart office, a smart wearable, smart transportation, and a smart city. The terminal may be a mobile phone, a tablet computer, a computer with a wireless transceiver function, a wearable device, a vehicle, an uncrewed aerial vehicle, a helicopter, an airplane, a ship, a robot, a robot arm, a smart home device, or the like. A specific technology and a specific device form that are used by the terminal are not limited in embodiments of this application.

The base station and the terminal may be fixed or movable. The base station and the terminal may be deployed on land, including an indoor or outdoor scenario, and a handheld or a vehicle-mounted scenario; may be deployed on water; or may be deployed on an airplane, a balloon, and a man-made satellite. Application scenarios of the base station and the terminal are not limited in embodiments of this application.

Roles of the base station and the terminal may be relative. For example, a helicopter or an uncrewed aerial vehicle 120i in FIG. 6 may be configured as a mobile base station, and for a terminal 120j accessing the radio access network 100 through 120i, a terminal 120i is a base station. However, for the base station 110a, 120i is a terminal. In other words, communication between 110a and 120i is performed based on a wireless air interface protocol. It is clear that communication between 110a and 120i may alternatively be performed based on an interface protocol between base stations. In this case, for 110a, 120i is also a base station. Therefore, both the base station and the terminal may be collectively referred to as communication apparatuses, 110a and 110b each in FIG. 6 may be referred to as a communication apparatus having a function of the base station, and 120a to 120j each in FIG. 6 may be referred to as a communication apparatus having a function of the terminal.

Communication between a base station and a terminal, between base stations, or between terminals may be performed through a licensed spectrum, or may be performed through an unlicensed spectrum, or may be performed through both a licensed spectrum and an unlicensed spectrum. Communication may be performed through a spectrum below 6 gigahertz (gigahertz, GHz), or may be performed through a spectrum above 6 GHz, or may be performed through both a spectrum below 6 GHz and a spectrum above 6 GHz. A spectrum resource used for wireless communication is not limited in embodiments of this application.

In embodiments of this application, a function of the base station may alternatively be performed by a module (for example, a chip) in the base station, or may be performed by a control subsystem including the function of the base station. The control subsystem including the function of the base station herein may be a control center in the foregoing application scenarios, such as a smart grid, industrial control, smart transportation, and a smart city. The function of the terminal may alternatively be performed by a module (for example, a chip or a modem) in the terminal, or may be performed by an apparatus including the function of the terminal.

In this application, the base station sends a downlink signal or downlink information to the terminal, where the downlink information is carried on a downlink channel; and the terminal sends an uplink signal or uplink information to the base station, where the uplink information is carried on an uplink channel. To communicate with the base station, the terminal needs to establish a wireless connection to a cell controlled by the base station. The cell to which the terminal establishes the wireless connection is referred to as a serving cell of the terminal. When communicating with the serving cell, the terminal is further interfered by a signal from a neighboring cell.

With the gradual evolution of communication systems, "low carbon" has attracted increasing attention in communication networks. Especially, how to reduce energy consumption of a base station (a network device) has attracted increasing attention. One of main technical means for reducing the energy consumption of the network device is to reduce unnecessary signal sending. For example, when the network device does not send any data information, the network device should not send any signal from a perspective of energy consumption. However, for a terminal device to identify the network device, the network device has to send some always on (always on) signals, for example, an SSB and a message related to system information, for example, SIB1. To ensure that the terminal device can detect an NR carrier and access a network, an existing protocol specifies that a maximum cycle for sending an SSB by the network device is 20 milliseconds (ms).

Otherwise, the terminal device may fail to detect the NR network. In addition, SIB1 further includes information necessary for the terminal device to access the network. Therefore, if a cycle for sending SIB1 is long, the terminal device needs to wait for a long time to access the network. This also reduces experience of the terminal device. Therefore, how to reduce overheads of an always on signal, to reduce energy consumption of a network device without affecting experience of a terminal device is a problem that is being resolved by researchers in the art.

Currently, it is proposed that, through adjusting of a physical random access channel (physical random access channel, PRACH) resource, when load is zero/low, a base station performs blind detection for a preamble on a PRACH resource that is sparse in time domain, and when load is medium/high, the base station performs blind detection for a preamble on a PRACH resource that is dense in time domain, to reduce energy consumption of the base station in a zero/low load case. However, the base station needs to notify a terminal of a change of the PRACH resource by updating system information. However, due to frequent update of the system information, the base station needs to frequently send the system information, and the terminal also needs to frequently receive the system information. Therefore, a more lightweight random access resource update mechanism needs to be studied.

In view of this, an embodiment of this application provides a resource indication method. In the method, a base station may indicate M PRACH resources to a terminal, and indicate N PRACH resources in the M PRACH resources via indication information to the terminal for random access. Based on this solution, when load is different, the base station may indicate, based on indication information, a PRACH resource that is sparse in time domain or a PRACH resource that is dense in time domain, so that a quantity of times that the base station sends system information can be reduced, and energy consumption of the base station can be effectively reduced.

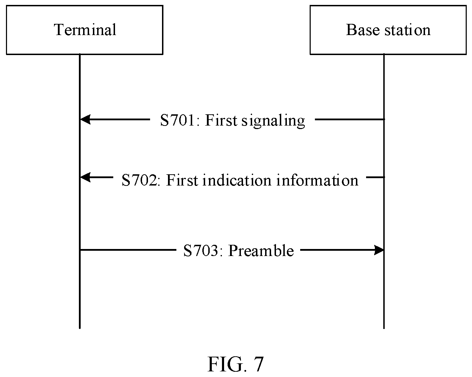

FIG. 7 is an example flowchart of a resource indication method according to an embodiment of this application. The following operations may be included.

S701: A base station sends first signaling to a terminal.

Correspondingly, the terminal receives the first signaling from the base station.

The first signaling indicates M PRACH resources, and M is an integer greater than 1. For example, M may be equal to 2, 3, or the like. This is not specifically limited in this application. The M PRACH resources may be used to carry a preamble. It may be understood that, in the M PRACH resources, each PRACH resource includes PRACH configuration periods (PRACH configuration periods) that are repeated at a cycle in time domain, a PRACH configuration period may include one or more ROs in time domain, and each RO may include one or more OFDM symbols in time domain. Each PRACH resource may include one or more resource blocks (resource blocks, RBs) in frequency domain. In other words, each PRACH resource may include one RO in frequency domain, or include a plurality of frequency division multiplexed ROs in frequency domain, and each RO includes one or more RBs in frequency domain.

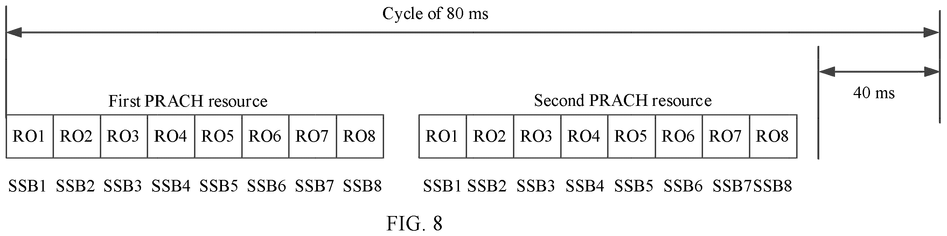

It should be noted that the terminal device separately performs SSB-to-RO mapping of the M PRACH resources. In other words, mapping from an SSB to an RO is performed in a preset order on each PRACH resource of the M PRACH resources. The preset order may be: First, mapping is performed in one RO in ascending order of preamble indexes. Then, mapping is performed in ascending order of frequency domain resource indexes of frequency division multiplexed ROs. Then, mapping is performed in ascending order of time domain resource indexes of time division multiplexed ROs in a PRACH slot. Finally, mapping is performed in ascending order of PRACH slot indexes. For example, refer to FIG. 8. There are eight SSBs in total. SSB1 is mapped to RO1 of a first PRACH resource, SSB2 is mapped to RO2 of the first PRACH resource, and so on. Similarly, SSB1 is mapped to RO1 of a second PRACH resource, SSB2 is mapped to RO2 of the second PRACH resource, and so on.

In a possible case, the first signaling above may be SIB 1. In other words, the base station may indicate the M PRACH resources to the terminal based on SIB1.

S702: The base station sends first indication information to the terminal.

Correspondingly, the terminal receives the first indication information from the base station. The first indication information may indicate N PRACH resources in the M PRACH resources, and N is a positive integer less than or equal to M. For example, N may be equal to 1, 2, or the like. This is not specifically limited in this application.

In a possible case, the first indication information may be downlink control information (downlink control information, DCI), a medium access control (medium access control, MAC) control element (control element, CE), a radio resource control (radio resource control, RRC) message, or a paging (paging) message.

Optionally, the base station may further indicate, to the terminal, a resource to carry the first indication information. For example, the base station may send third information to the terminal before S702, where the third information indicates a resource to carry the first indication information, for example, a time domain resource and a frequency domain resource. In a possible implementation, the third indication information may indicate a first time domain resource and a first frequency domain resource. In a possible implementation, the third indication information may indicate a first control resource set (control resource set, CORESET) and first search space (search space, SS). For another example, the third information may be carried in the first signaling in S701, for example, SIB1. In this way, the terminal may receive, on the resource indicated by the third information, the first indication information from the base station.

In an example, the base station may further indicate a quantity of repetition times of the first indication information to the terminal. For example, the base station may send fourth information to the terminal before S702, where the fourth information may indicate the quantity of repetition times of the first indication information. For another example, the fourth information may be carried in the first signaling in S701, such as SIB1. In this way, the terminal may determine the quantity of repetition times of the first indication information based on the quantity of repetition times that is indicated by the fourth information, so that a possibility of successfully receiving the first indication information by the terminal device is increased by repeatedly transmitting the first indication information. This ensures that even a terminal device in a poor coverage condition can correctly obtain the first indication information, and correctly learn of a PRACH resource that should be used.

In a possible case, the terminal may determine the N PRACH resources from the M PRACH resources based on the first indication information. The terminal may send a preamble on the N PRACH resources. Embodiments shown in FIG. 7 may further include the following operations. S703: The terminal sends a preamble on a first RO in the N PRACH resources or sends a preamble on a first RO in (M-N) PRACH resources.

Correspondingly, the base station receives the preamble from the terminal.

The first RO may be one of ROs included in the N PRACH resources, or one of ROs included in the (M-N) PRACH resources.

In a possible implementation, the first indication information above may indicate one PRACH resource in the first PRACH resource and one or more second PRACH resources. Alternatively, the first indication information above may indicate a set including one or more second PRACH resources of the one or more second PRACH resources and the first PRACH resource. The following separately uses a case 1 and a case 2 for description.

Case 1: The first indication information indicates one PRACH resource in the first PRACH resource and the one or more second PRACH resources.

In case 1, the first signaling may indicate one first PRACH resource and one or more second PRACH resources. Optionally, the second PRACH resources and the first PRACH resource may overlap, or may not overlap. In other words, the one or more second PRACH resources may include a PRACH resource that is completely the same as the first PRACH resource.

In a possible case, when the first signaling indicates the first PRACH resource and the one or more second PRACH resources, the first signaling may include first configuration information and one or more pieces of second configuration information. The first configuration information may be used to configure the first PRACH resource. The first signaling may include the one or more pieces of second configuration information, and the one or more pieces of second configuration information is in a one-to-one correspondence with the one or more second PRACH resources. In this way, the terminal may determine the one or more second PRACH resources based on the one or more pieces of second configuration information. The terminal may determine the first PRACH resource based on the first configuration information, and determine the one or more second PRACH resources based on the one or more pieces of second configuration information.

For example, the first configuration information may include a time domain resource configuration of the first PRACH resource. The time domain resource configuration includes a PRACH configuration period (or a cycle) and a time domain configuration pattern of an RO in the PRACH configuration period, and the time domain configuration pattern indicates a time domain location of the RO in the PRACH configuration period. For example, the first configuration information may include a PRACH configuration index (prach-ConfigurationIndex) in SIB1. The terminal may determine a corresponding PRACH resource by searching a table based on an index value indicated by the PRACH configuration index. The index value may correspond to a PRACH cycle (or a PRACH configuration period), a preamble type, and a time domain configuration pattern of an RO in the PRACH cycle. The time domain configuration pattern of the RO in the PRACH cycle may include a quantity of OFDM symbols included in the RO, a quantity of ROs included in a PRACH slot, an index of a 1^{st} OFDM symbol for carrying the RO in the PRACH slot, an index of a frame in which the slot including the RO in the PRACH cycle is located, an index of a subframe in which the slot including the RO in the frame is located, and the like.

Similarly, for the second configuration information, refer to the foregoing first configuration information implementations. Details are not described herein again.

The first indication information above may indicate one PRACH resource in the first PRACH resource and the one or more second PRACH resources, and the N PRACH resources in S702 may be understood as the PRACH resource. In this way, the terminal may send the preamble on a first RO in the PRACH resource. The first RO may be one of one or more ROs included in the PRACH resource.

The first indication information may be P bits, and a value of P may be determined based on quantities of the first PRACH resource and the one or more second PRACH resources.

For example, the first signaling indicates one first PRACH resource and one second PRACH resource, and the first indication information may be 1 bit. For example, when a value of the first indication information is 0, the first PRACH resource may be indicated. When the value of the first indication information is 1, the second PRACH resource may be indicated. On the contrary, when the value of the first indication information is 1, the first PRACH resource may be indicated. When the value of the first indication information is 0, the second PRACH resource may be indicated.

For another example, the first signaling indicates one first PRACH resource and two second PRACH resources, and the first indication information may be 2 bits. For example, when a value of the first indication information is 0, the first PRACH resource may be indicated. When the value of the first indication information is 1, a 1^{st} second PRACH resource may be indicated. When the value of the first indication information is 2, a 2^{nd} second PRACH resource may be indicated. It may be understood that the value of the first indication information is merely shown as an example, and does not constitute a limitation on the first indication information.

The following uses an example in which the first signaling indicates one first PRACH resource and one second PRACH resource for description.

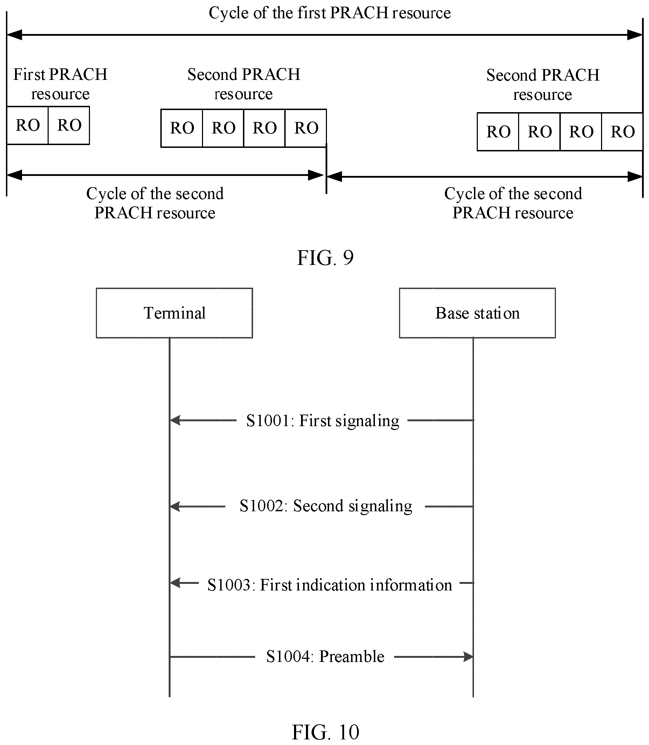

Refer to FIG. 9. A cycle (or a PRACH configuration period) of the first PRACH resource may be greater than a cycle (or a PRACH configuration period) of the second PRACH resource. In other words, the first PRACH resource is a PRACH resource that is sparse in time domain, and the second PRACH resource is a PRACH resource that is dense in time domain. The base station may separately indicate the first PRACH resource that is sparse in time domain and the second PRACH resource that is dense in time domain to the terminal based on the first signaling. For example, the first PRACH resource may include two ROs in one cycle, and the second PRACH resource may include four ROs in one cycle. The first indication information may indicate one PRACH resource in the first PRACH resource and the second PRACH resource, and the N PRACH resources may be understood as the PRACH resource. The terminal may send the preamble on a first RO in the PRACH resource. For example, when load of the base station is high, the base station may indicate the second PRACH resource to the terminal based on the first indication information, to reduce a delay in accessing a network by the terminal. The terminal may send the preamble on one of the four ROs included in the second PRACH resource shown in FIG. 8. For another example, when load of the base station is low, the base station may indicate the first PRACH resource based on the first indication information, to reduce energy consumption of the base station. The terminal may send the preamble on one of the two ROs included in the first PRACH resource shown in FIG. 9.

Case 2: The first indication information indicates a set that includes the first PRACH resource and any one or more of the one or more second PRACH resources.

In case 2, the first signaling may indicate one first PRACH resource and one or more second PRACH resources. It may be understood that the one or more second PRACH resources do not overlap or are different from the first PRACH resource.

In a possible case, the first signaling may include first configuration information and one or more pieces of second configuration information. The first configuration information may be used to configure the first PRACH resource. The first signaling may include the one or more pieces of second configuration information, and the one or more pieces of second configuration information is in a one-to-one correspondence with the one or more second PRACH resources. In this way, the terminal may determine the one or more second PRACH resources based on the one or more pieces of second configuration information. The terminal may determine the first PRACH resource based on the first configuration information. The terminal may determine one or more PRACH resources based on the first configuration information and the one or more pieces of second configuration information.

It may be understood that, for the first configuration information, refer to the first configuration information implementation in the foregoing case 1.

In case 2, the second configuration information may indicate a time domain resource configuration of the second PRACH resource. The time domain resource configuration includes a PRACH configuration period (or a cycle) and a time domain configuration pattern of an RO in the PRACH configuration period, and the time domain configuration pattern indicates a time domain location of the RO in the PRACH configuration period. P for other configuration information of the PRACH resource, for example, a preamble type, may be the same as that for the first configuration information. In this way, the terminal may determine the PRACH cycle and the RO pattern in the PRACH cycle based on the second configuration information, and the terminal may determine the other configuration information of the PRACH resource based on the first configuration information, to determine one second PRACH resource.

In a possible case, the second configuration information may indicate a time domain offset Y, and the time domain offset is an offset between a time domain start location of a second PRACH resource and a time domain start location of a first PRACH resource in a first PRACH configuration period (cycle). The first PRACH configuration period is a PRACH configuration period (cycle) of the first PRACH resource. The second PRACH resource is determined based on the time domain offset and the RO configuration pattern that is in the first PRACH configuration period and that is indicated by the first configuration information, that is, an RO configuration pattern of the second PRACH resource is an RO configuration pattern of the first PRACH resource that is offset by Y time units in time domain.

Optionally, the second configuration information may further indicate an RO configuration pattern of the second PRACH resource. For example, the second configuration information may indicate both the time domain offset and the RO configuration pattern of the second PRACH resource. The first indication information above may indicate to activate one or more PRACH resources in the one or more second PRACH resources. The N PRACH resources in S702 may be understood as the first PRACH resource and the activated one or more second PRACH resources. In this case, the terminal may send the preamble on a first RO in the one or more PRACH resources. Each of the one or more PRACH resources may include one or more ROs, and the first RO may be one of the ROs included in the one or more PRACH resources.

Alternatively, the first indication information may indicate to deactivate one or more PRACH resources of the one or more second PRACH resources, namely, the N PRACH resources in S702. In this case, the terminal may send the preamble on the first RO in the (M-N) PRACH resources. Each of the (M-N) PRACH resources may include one or more ROs, and the first RO may be one of the ROs included in the (M-N) PRACH resource.

The first indication information may be P bits, and a value of P may be determined based on quantities of the first PRACH resource and the second PRACH resource.

For example, the first signaling indicates one first PRACH resource and one second PRACH resource. The first indication information may be activation or deactivation information. The first indication information may be 1 bit. For example, when a value of the first indication information is 0, the first indication information may indicate to deactivate the second PRACH resource. In this case, the N PRACH resources in S702 may be understood as the second PRACH resource. The terminal may send the preamble on the (M-N) PRACH resources, namely, a first RO in the first PRACH resource.

When the value of the first indication information is 1, it may be indicated to activate the second PRACH resource. In this case, the N PRACH resources in S702 may be understood as the first PRACH resource and the second PRACH resource. In this case, the terminal may send the preamble on the N PRACH resources, namely, a first RO in the first PRACH resource and the second PRACH resource. On the contrary, when the value of the first indication information is 1, the first indication information may indicate to deactivate the second PRACH resource. In this case, the N PRACH resources in S702 may be understood as the second PRACH resource. In this case, the terminal may send the preamble on the (M-N) PRACH resources, namely, the first RO in the first PRACH resource.

When the value of the first indication information is 0, the first indication information may indicate to activate the second PRACH resource. In this case, the N PRACH resources in S702 may be understood as the first PRACH resource and the second PRACH resource. The terminal may send the preamble on the N PRACH resources, namely, the first RO in the first PRACH resource and the second PRACH resource.

For another example, the first signaling indicates one first PRACH resource and two second PRACH resources. The first indication information may be activation or deactivation information. The first indication information may be 2 bit. For example, when a value of the first indication information is 0, the first indication information may indicate to deactivate the two second PRACH resources. In this case, the N PRACH resources in S702 may be understood as the two second PRACH resources. The terminal may send the preamble on the (M-N) PRACH resources, namely, a first RO in a 1^{st} PRACH resource.

When the value of the first indication information is 0, the first indication information may indicate to activate a 1^{st} second PRACH resource. In this case, the N PRACH resources in S702 may be understood as the first PRACH resource and the 1^{st} second PRACH resource. The terminal may send the preamble on the N PRACH resources, namely, a first RO in the first PRACH resource and the 1^{st} second PRACH resource.

Alternatively, when the value of the first indication information is 0, the first indication information may indicate to deactivate a 2^{nd} second PRACH resource. In this case, the N PRACH resources in S702 may be understood as the 2^{nd} second PRACH resource. The terminal may send the preamble on the (M-N) PRACH resources, namely, a first RO in the first PRACH resource and a 1^{st} PRACH resource.

When the value of the first indication information is 1, the first indication information may indicate to activate the 2^{nd} second PRACH resource. In this case, the N PRACH resources in S702 may be understood as the first PRACH resource and the 2^{nd} second PRACH resource. The terminal may send the preamble on the N PRACH resources, namely, a first RO in the first PRACH resource and the 2^{nd} second PRACH resource.

Alternatively, when the value of the first indication information is 1, the first indication information may indicate to deactivate the 1^{st} second PRACH resource. In this case, the N PRACH resources in S702 may be understood as the 1^{st} second PRACH resource. The terminal may send the preamble on the (M-N) PRACH resources, namely, the first RO in the first PRACH resource and the 2^{nd} second PRACH resource.

When the value of the first indication information is 2, the first indication information may indicate to activate the two second PRACH resources. In this case, the N PRACH resources in S702 may be understood as the first PRACH resource and the two second PRACH resources. The terminal may send the preamble on the N PRACH resources, namely, a first RO in the first PRACH resource and the two second PRACH resources.

It should be noted that the value of the first indication information in the foregoing example is merely shown as an example, and does not constitute a limitation on the first indication information. The following uses an example in which the first signaling indicates one first PRACH resource and one second PRACH resource for description.

Refer to FIG. 9. A cycle of the first PRACH resource may be greater than a cycle of the second PRACH resource. In other words, the first PRACH resource is a PRACH resource that is sparse in time domain, and the second PRACH resource is a PRACH resource that is dense in time domain. The first RRACH resource may include two ROs in one PRACH cycle, and the second PRACH resource may include four ROs in one PRACH cycle. The first indication information may indicate the first PRACH resource, or the first PRACH resource and the second PRACH resource. The terminal may send the preamble on a first RO in the first PRACH resource, or on a first RO in the first PRACH resource and the second PRACH resource. For example, when load of the base station is high, the base station may indicate the second PRACH resource and the first PRACH resource to the terminal based on the first indication information, to reduce a delay in accessing a network by the terminal. For another example, when load of the base station is low, the base station may indicate the first PRACH resource based on the first indication information, to reduce energy consumption of the base station.

Based on the foregoing case 1 and case 2, the base station may indicate, to the terminal based on the first indication information, a PRACH resource for sending the preamble. The terminal may send the preamble on a first RO in the PRACH resource indicated by the base station. In a possible case, the terminal may select one or more preambles from a preamble set corresponding to the first RO for sending. The preamble set may be all preambles included in the first RO. For example, the first RO may correspond to 64 preambles, and the terminal may select one or more preambles from the 64 preambles, and send the selected one or more preambles on the first RO. Alternatively, the preamble set may be an available preamble set that is for the first RO and that is configured based on a higher-layer parameter. A set of preambles whose quantity is indicated by a higher-layer parameter totalNumberOfRA-Preambles (totalNumberOfRA-Preambles) is used as an example. The preamble set is a set including a preamble whose index is 0 to a preamble whose index is totalNumberOfRA-Preambles-1 (totalNumberOfRA-Preambles-1). The terminal may select one or more preambles from totalNumberOfRA-Preambles (totalNumberOfRA-Preambles) preambles, and send the selected one or more preambles on the first RO.

In another possible case, the base station may indicate, to the terminal, a first preamble set for sending one or more preambles on the first PRACH resource. The first preamble set is a subset of the preamble set corresponding to the first RO. The preamble set corresponding to the first RO is described above. For example, the base station may send first information to the terminal, where the first information may indicate the first preamble set. The first preamble set may include one or more preambles, and the one or more preambles included in the first preamble set may be used by the terminal for sending on the first PRACH resource.

It may be understood that the first preamble set is different from a second preamble set, and the second preamble set may be used by the terminal to send one or more preambles on the second PRACH resource. For example, the second preamble set may also include one or more preambles, and the one or more preambles included in the second preamble set may be used by the terminal for sending on the second PRACH resource. Alternatively, the second preamble set may be a preamble set corresponding to the first RO. The preamble set corresponding to the first RO is described above.

In an example, the base station may send the first information to the terminal before S703. In another example, the first information may be carried in the first signaling, for example, SIB1.

Optionally, the second preamble set is used by the terminal to send one or more preambles on a PRACH resource that is in the second PRACH resource and that does not overlap the first PRACH resource. In other words, the one or more preambles included in the first preamble set are only used by the terminal for sending on the first PRACH resource, and the one or more preambles included in the second preamble set are only used by the terminal for sending on a second PRACH resource that does not overlap the first PRACH resource.

It may be understood that the terminal in embodiments shown in FIG. 7 may meet any one or more of the following conditions: 1. The terminal has a capability of receiving the first indication information. In other words, the terminal in embodiments shown in FIG. 7 needs to be capable of receiving the first indication information, and may further parse the first indication information. 2. The terminal has a capability of parsing the first signaling. In other words, the terminal in embodiments shown in FIG. 7 needs to be capable of parsing the first signaling, to obtain the M PRACH resources indicated by the base station for the terminal, or to obtain the one or more second PRACH resources indicated by the base station for the terminal. 3. One or more second PRACH resources are configured for the terminal. In other words, the terminal can receive the first signaling and parse the first signaling, to obtain the one or more second PRACH resources indicated by the base station for the terminal.

It should be noted that a terminal that does not meet all the foregoing conditions cannot receive the first indication information, and cannot parse some content in the first signaling, for example, cannot parse the one or more second PRACH resources indicated by the first signaling. For ease of description, herein, the terminal that does not meet all the foregoing conditions may be referred to as a second terminal, and a terminal that meets any one or more of the foregoing conditions is referred to as a first terminal.

The first information of the base station may be used to configure the first preamble set for the first terminal for sending on the first PRACH resource, to avoid excessive occupation of a code domain resource of the second terminal by the first terminal, and avoid impact on network access by the second terminal. The second terminal may be understood as a terminal that can send a preamble only on the first PRACH resource. The second terminal can send the preamble only on the first PRACH resource. Therefore, if a set of preambles used by the first terminal on the first PRACH resource is not limited, a probability of a conflict between the first terminal and the second terminal during preamble selection is greatly increased. Therefore, the first information is used to configure the first terminal to use a preamble in the first preamble set only on the first PRACH resource, so that occupation of a preamble resource of the second terminal device can be reduced. In addition, because the first terminal may use the second PRACH resource, and there is no second terminal on the second PRACH resource, a preamble used by the first terminal on the second PRACH resource may not be limited, that is, the first terminal uses a preamble in the second preamble set on the second PRACH resource, where the second preamble set is different from the first preamble set. Because the first terminal may use the second PRACH resource, a code domain resource of the first terminal is not limited because the first information is used to configure the first preamble set.

Optionally, in embodiments shown in FIG. 7, the base station may further send second information to the terminal. The second information may indicate a third preamble set. For example, the base station may send the second information to the terminal before S703. For another example, the second information may be carried in the first signaling, for example, SIB1. The third preamble set includes one or more preambles for sending by the terminal on the first PRACH resource.

In a possible case, after receiving the second information, the terminal in embodiments shown in FIG. 7 receives the first indication information. In other words, after the base station indicates the third preamble set sent on the first PRACH resource, the terminal may receive the first indication information, to determine the N PRACH resources. It should be understood that the preamble in the third preamble set is used by the first terminal to trigger the first indication information, so as to trigger a change of a PRACH resource. After the first terminal sends the preamble in the third preamble set, a network device may learn of existence of the first terminal, and learn of a quantity of first terminals by performing related signal processing, to indicate a PRACH resource suitable for a current situation based on the first indication information. When there are a large quantity of first terminals, a PRACH resource with a higher time domain density is used. When there are a small quantity of first terminals, a PRACH resource with a lower time domain density is used.

Based on embodiments shown in FIG. 7, the base station may indicate the M PRACH resources via the first signaling, and dynamically indicate, via the first indication information, a PRACH resource to the terminal for random access. This can reduce a quantity of times that the base station sends system information, and reduce energy consumption of the base station. In addition, the base station may indicate the M PRACH resources, and dynamically indicate, via the first indication information, a PRACH resource to the terminal for random access. In comparison with a technical solution in which a base station does not send system information for a long time, this can reduce a delay in network access by the terminal.

In embodiments shown in FIG. 7, the first PRACH resource and the one or more second PRACH resources are indicated based on first signaling. In a possible case, the first PRACH resource and the one or more second PRACH resources may be configured based on different signaling. The following provides descriptions by using FIG. 10.

FIG. 10 is an example flowchart of a resource indication method according to an embodiment of this application. The following operations may be included.

S1001: A base station sends first signaling to a terminal.

Correspondingly, the terminal receives the first signaling from the base station.

Different from embodiments shown in FIG. 7, the first signaling in S1001 may indicate a first PRACH resource to the terminal. For example, the first signaling may indicate one first PRACH resource. For the first PRACH resource, refer to the embodiment implementations shown in FIG. 7. Details are not described herein again.

S1002: The base station sends second signaling to the terminal.

Correspondingly, the terminal receives the second signaling from the base station.

The second signaling may indicate one or more second PRACH resources to the terminal. For the one or more second PRACH resources, refer to the embodiment implementations shown in FIG. 7. Details are not described herein again.

S1003: The base station sends first indication information to the terminal.

Correspondingly, the terminal receives the first indication information from the base station.

The first indication information may indicate N PRACH resources in M PRACH resources. It may be understood that, for the N PRACH resources, refer to the embodiment implementations shown in FIG. 7. Details are not described herein again.

S1004: The terminal sends a preamble on a first RO in the N PRACH resources or on a first RO in (M-N) PRACH resources.

Correspondingly, the base station receives the preamble from the terminal.

It may be understood that S1004 may be implemented with reference to S703. Details are not described herein again.

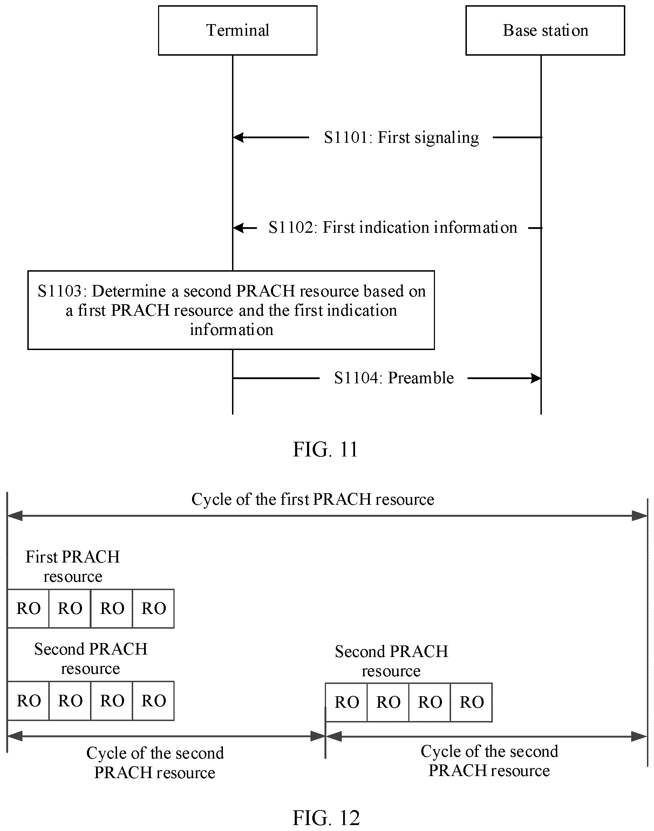

In the foregoing embodiments shown in FIG. 7 and FIG. 10, the base station may indicate the M PRACH resources to the terminal, and indicate the N PRACH resources based on the first indication information, so that the terminal sends the preamble on the first RO in the N PRACH resources or on the first RO in the (M-N) PRACH resources. In a possible case, the base station may indicate one PRACH resource to the terminal, and configure a parameter of the PRACH resource based on the first indication information, so that the terminal determines the PRACH resource based on the first indication information. The following provides descriptions by using FIG. 11. It may be understood that in an embodiment shown in FIG. 11, a function of a first indication information is different from that described above, and a function of first signaling is different from that described above. Similarly, a first PRACH resource and a second PRACH resource are different from those described above.

FIG. 11 is an example flowchart of a resource indication method according to an embodiment of this application. The following operations may be included.

S1101: A base station sends first signaling to a terminal.

Correspondingly, the terminal receives the first signaling from the base station.

The first signaling may indicate a first PRACH resource. The first PRACH resource may include a plurality of parameters, and the plurality of parameters include a first value of a first parameter. In other words, the first signaling may indicate that the first parameter of the first PRACH resource is the first value.

Optionally, the first parameter may include a cycle, namely, a PRACH cycle. In this specification, the PRACH cycle may also be referred to as a PRACH configuration period. In other words, the first signaling may indicate that the PRACH cycle of the first PRACH resource is the first value. In a possible case, the first signaling above may be SIB 1. In other words, the base station may indicate the first PRACH resource to the terminal based on SIB 1.

S1102: The base station sends first indication information to the terminal.

Correspondingly, the terminal receives the first indication information from the base station.

The first indication information indicates a second value of the first parameter. In other words, the first indication information may indicate that the first parameter of the first PRACH resource is the second value. For example, the first indication information may indicate that the PRACH cycle of the first PRACH resource is the second value.

In a possible case, the second value may be the same as the first value. In other words, the base station may indicate, based on the first indication information, that a first parameter of a PRACH resource used by the terminal for random access is the same as a parameter of the first PRACH resource. Alternatively, the base station may indicate, based on the first indication information, that a PRACH resource used by the terminal for random access is the first PRACH resource. In another possible case, the second value is different from the first value. For example, the second value may be not less than the first value, or the second value may be not greater than the first value. In other words, the base station may indicate, based on the first indication information, that a first parameter of a PRACH resource used by the terminal for random access is the second value. For example, when the first parameter includes the cycle, if the second value is not less than the first value, it may be considered that the PRACH resource indicated by the first indication information is a PRACH resource that is sparse in time domain in comparison with the first PRACH resource indicated by the first signaling. When the first parameter includes the cycle, if the second value is not greater than the first value, it may be considered that the PRACH resource indicated by the first indication information is a PRACH resource that is dense in time domain in comparison with the first PRACH resource indicated by the first signaling.

In a possible case, the first indication information may be DCI, a MAC CE, an RRC message, or a paging (paging) message.

Optionally, the base station may further indicate, to the terminal, a resource to carry the first indication information. For example, the base station may send third information to the terminal before S1102, where the third information indicates a resource to carry the first indication information, for example, a time domain resource and a frequency domain resource. In a possible implementation, the third indication information may indicate a first time domain resource and a first frequency domain resource. In a possible implementation, the third indication information may indicate a first CORESET and first SS. For another example, the third information may be carried in the first signaling in S1101, for example, SIB1. In this way, the terminal may receive, on the resource based on the resource indicated by the third information, the first indication information from the base station.

In an example, the base station may further indicate a quantity of repetition times of the first indication information to the terminal. For example, the base station may send fourth information to the terminal before S1102, where the fourth information may indicate the quantity of repetition times of the first indication information. For another example, the fourth information may be carried in the first signaling in S1101, for example, SIB1. In this way, the terminal may determine the quantity of repetition times of the first indication information based on the quantity of repetition times that is indicated by the fourth information, so that a possibility of successfully receiving the first indication information by the terminal device is increased by repeatedly transmitting the first indication information. In this way, it is ensured that even a terminal device in a poor coverage condition can correctly obtain the first indication information, and correctly learn of a change of a PRACH resource.

S1103: The terminal determines a second PRACH resource based on the first PRACH resource and the first indication information.

For example, the terminal may determine the second PRACH resource based on the first PRACH resource and the second value of the first parameter. In other words, a first parameter of the second PRACH resource is the second value. It may be understood that, a parameter other than the first parameter of the second PRACH resource may be the same as that of the first PRACH resource. Optionally, the first parameter is a cycle of the PRACH resource (the cycle of the PRACH resource may be referred to as a configuration period of the PRACH resource). The first value is not less than the second value, or in other words, a cycle of the PRACH resource corresponds to the first value is not less than a PRACH cycle corresponding to the second value. Alternatively, a configuration period that is of the PRACH resource and that corresponds to the first value is not less than a configuration period that is of the PRACH resource and that corresponds to the second value.

For example, refer to FIG. 12. The terminal receives the first signaling, where the first signaling is used to configure a PRACH cycle of the first PRACH resource as a first cycle, and each first cycle includes four ROs. The terminal device receives the first indication information, where the first indication information indicates that a PRACH cycle is a second cycle, that is, a PRACH cycle of the second PRACH resource is the second cycle. The second cycle is less than the first cycle, and each second cycle still includes four ROs. It can be seen from FIG. 12 that, because a cycle becomes smaller, a density of ROs in time domain is increasing.

It may be understood that the terminal in embodiments shown in FIG. 11 may meet any one or more of the following conditions: 1. The terminal has a capability of receiving the first indication information. In other words, the terminal in embodiments shown in FIG. 11 needs to be capable of receiving the first indication information, and may further parse the first indication information. 2. The terminal has a capability of parsing the first signaling. In other words, the terminal in embodiments shown in FIG. 7 needs to be capable of parsing the first signaling, to obtain the M PRACH resources indicated by the base station for the terminal, or to obtain the one or more second PRACH resources indicated by the base station for the terminal. 3. One or more second PRACH resources are configured for the terminal. In other words, the terminal can receive the first signaling and parse the first signaling, to obtain the one or more second PRACH resources indicated by the base station for the terminal.

It should be noted that a terminal that does not meet all the foregoing conditions cannot receive the first indication information, and cannot parse some content in the first signaling, for example, cannot parse the one or more second PRACH resources indicated by the first signaling. For ease of description, herein, the terminal that does not meet all the foregoing conditions may be referred to as a second terminal, and a terminal that meets any one or more of the foregoing conditions is referred to as a first terminal.

It may be understood that the first indication information is newly added signaling, and is invisible to an original terminal in a network, namely, the second terminal. Therefore, the second terminal cannot read the first indication information. If the first indication information indicates that a time domain length of the PRACH cycle is prolonged, although a terminal that can read the first indication information, namely, the first terminal, considers that the PRACH cycle is prolonged, and consequently, a RO density in time domain is reduced, the second terminal still considers that a short PRACH cycle is used in the network. Consequently, a preamble cannot be received on a second PRACH resource with a long cycle in the network. In this case, it is meaningless for the base station to adjust the PRACH cycle, and uplink energy saving cannot be performed. Therefore, the first parameter is a cycle, and a cycle corresponding to the first value cannot be less than a cycle corresponding to the second value.

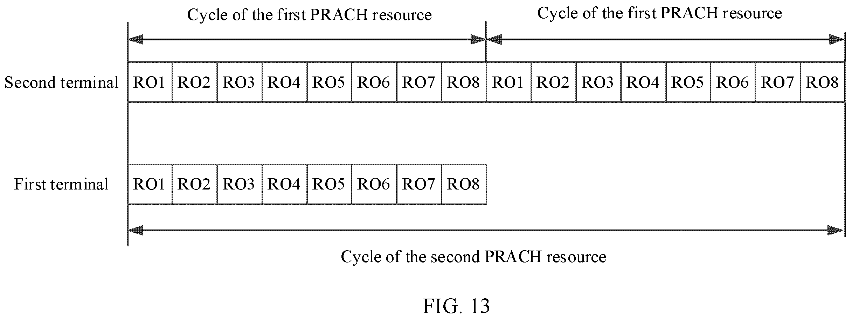

For example, refer to FIG. 13. The first signaling is used to configure the PRACH cycle of the first PRACH resource as 10 ms, and the first indication information indicates that the PRACH cycle changes to 20 ms, that is, the PRACH cycle of the second PRACH resource is 20 ms. Because there is a terminal that cannot read dynamic signaling, namely, the second terminal, the base station still needs to receive the preamble on the second PRACH resource with a short cycle. Consequently, PRACH cycle adjustment is meaningless, the base station cannot reduce uplink PRACH reception by adjusting the PRACH cycle, and energy consumption of uplink reception cannot be reduced. Because there may be a second terminal in the network, when the first terminal maps an SSB to a PRACH resource, SSBs that are mapped by the first terminal and the second terminal to an overlapped PRACH resource in the first PRACH resource and the second PRACH resource may be different. As a result, the base station needs to know two different mapping manners, and the base station needs to receive the preamble in two different processing manners. This increases complexity of the base station.

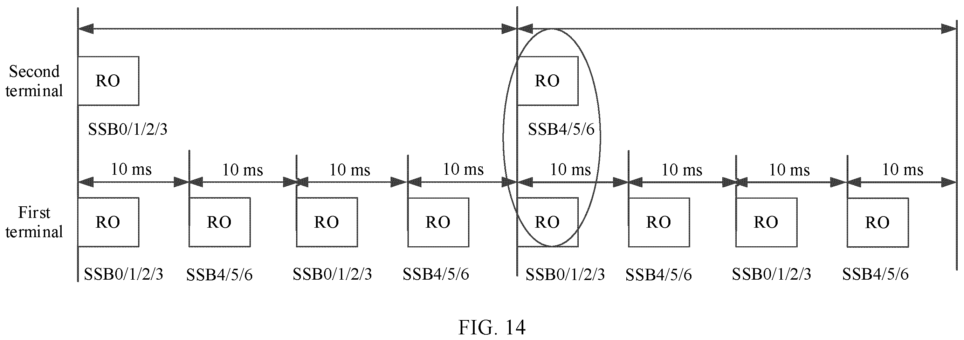

Refer to FIG. 14. The base station configures seven SSBs, the first signaling is used to configure the PRACH cycle of the first PRACH resource as 40 ms, one PRACH cycle includes one RO, and four SSBs are associated with one RO. The terminal determines, based on the first signaling, that an association period is 2. The first indication information indicates that the PRACH cycle is 10 ms, that is, the PRACH cycle of the second PRACH resource is 10 ms. A quantity of ROs included in one PRACH cycle of the second PRACH resource and an association relationship between an SSB and an RO are configured based on the first signaling. The terminal determines, based on the first signaling and the first indication information, that the association period is 2, and a time domain length of the association period is 2 x 10 ms. It can be learned from FIG. 14 that, for a first terminal that reads the first indication information, there are eight ROs in total within duration of 80 ms, and a 5^{th} RO corresponds to SSBO to SSB3 for scheduling. For a second terminal that does not read the first indication information, there are two ROs in total within duration of 80 ms, and a 2^{nd} RO corresponds to SSB4 to SSB7. The 5^{th} RO in the first PRACH resource and the 2^{nd} RO in the second PRACH resource overlap in time domain, but SSBs mapped by the first terminal and the second terminal to overlapped ROs are inconsistent. Therefore, the base station also needs to know two different mapping manners, and receive, in two processing manners, preambles sent by different terminals. This increases complexity of the base station.

To resolve the foregoing problems, in a possible case, an association period of the first PRACH resource is 1, and an association period of the second PRACH resource is 1. That is, regardless of a value of the first parameter, the association period of the PRACH resource determined based on the first parameter is always 1. For example, a time domain length of the association period of the first PRACH resource may be predefined as a product of 1 and a time domain length of a cycle according to a protocol. In other words, the terminal expects that the association period of the first PRACH resource determined based on the first signaling is 1. Because a quantity of ROs included in one PRACH cycle of the second PRACH resource and an association relationship between an SSB and an RO are configured based on the first signaling, that is, are configured based on the first PRACH resource, the association period of the second PRACH resource is also always 1. When association periods of the first PRACH resource and the second PRACH resource are 1, it may be found that the first terminal and the second terminal map a same SSB to an overlapped PRACH resource in the first PRACH resource and the second PRACH resource.

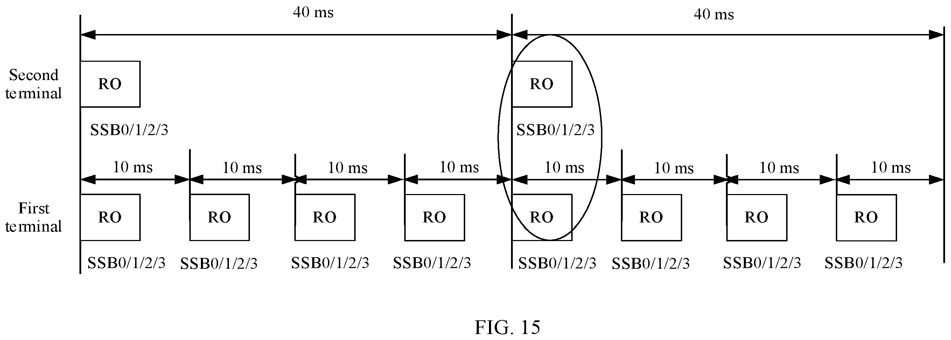

For example, refer to FIG. 15. The base station configures four SSBs, the first signaling is used to configure the PRACH cycle of the first PRACH resource as 40 ms, and one PRACH cycle includes one RO. Because the association period of the first PRACH resource is 1, when mapping the four SSBs to the first PRACH resource, the terminal may associate the four SSBs with one RO. The base station indicates, based on the first indication information, that the PRACH cycle is 10 ms, that is, the PRACH cycle of the second PRACH resource is 10 ms. The quantity of ROs included in one PRACH cycle of the second PRACH resource and the association relationship between an SSB and an RO are configured based on the first signaling. In other words, the association period of the second PRACH resource is 1, and when mapping the four SSBs to the first PRACH resource, the terminal may associate the four SSBs with one RO. It can be learned from FIG. 15 that, both the first terminal and the second terminal have a consistent understanding of the association relationship between an RO and an SSB, that is, SSBs to which overlapped ROs in the first PRACH resource and the second PRACH resource are mapped are the same.

In another possible case, the terminal may map, in two mutually independent mapping orders, G SSBs configured by the base station to a second PRACH resource in a first association period. The first association period may be an association period corresponding to the first PRACH resource, a time domain length of the first association period may be a first time domain length, and the first time domain length may be equal to a product of L and a time domain length of the cycle (a PRACH configuration period) of the first PRACH resource. L may be a minimum value that meets a preset condition in a preset set. The preset set may be one of a plurality of values corresponding to a PRACH cycle. For example, if the PRACH cycle is 10 ms, a corresponding preset set may be {1, 2, 4, 8, 16}. If the PRACH cycle is 20 ms, a corresponding preset set may be {1, 2, 4, 8}. If the PRACH cycle is 40 ms, a corresponding preset set may be {1, 2, 4}. If the PRACH cycle is 80 ms, a corresponding preset set may be {1, 2}. If the PRACH cycle is 160 ms, a corresponding preset set may be {1}. The preset condition may be that the G SSBs are mapped to the RO at least once within the time domain length of the association period (L PRACH cycles, or L PRACH configuration periods). For example, the two mapping orders may be a first mapping order and a second mapping order. The first mapping order and the second mapping order are independent of each other. In the first association period, the terminal may map, in the first mapping order, the G SSBs to a third PRACH resource included in the first association period, and map, in the second mapping order, the G SSBs to a fourth PRACH resource included in the first association period. Here, G is an integer greater than or equal to 1. The third PRACH resource included in the first association period and the fourth PRACH resource included in the first association period belong to the second PRACH resource included in the first association period, and the third PRACH resource included in the first association period does not overlap the fourth PRACH resource included in the first association period. For example, the third PRACH resource included in the first association period is an overlapped resource in the first PRACH resource and the second PRACH resource in the first association period, and the fourth PRACH resource included in the first association period is another resource than the third PRACH resource in the first PRACH resource and the second PRACH resource in the first association period.

Optionally, the first mapping order may be: First, mapping is performed in one RO in ascending order of preamble indexes. Then, mapping is performed in ascending order of frequency domain resource indexes of frequency division multiplexed ROs. Then, mapping is performed in ascending order of time domain resource indexes of time division multiplexed ROs in a PRACH slot. Finally, mapping is performed in ascending order of PRACH slot indexes.

Optionally, the second mapping order may be: first, mapping is performed in one RO in ascending order of preamble indexes. Then, mapping is performed in ascending order of frequency domain resource indexes of frequency division multiplexed ROs. Then, mapping is performed in ascending order of time domain resource indexes of time division multiplexed ROs in a PRACH slot. Finally, mapping is performed in ascending order of PRACH slot indexes.

For example, the terminal may determine the G SSBs. Optionally, the G SSBs may be sent by the base station, and the terminal may receive the G SSBs. In the first association period, the terminal may map the G SSBs to the third PRACH resource in the second PRACH resource in the first mapping order, and map the G SSBs to the fourth PRACH resource in the second PRACH resource in the second mapping order.

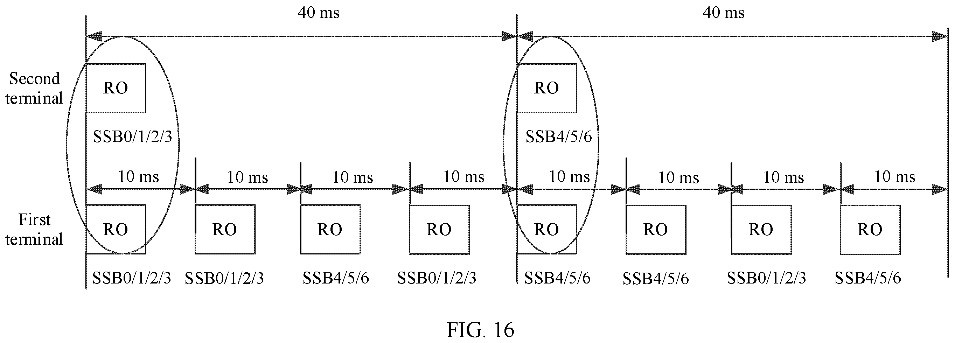

For example, refer to FIG. 16. The terminal may determine seven SSBs numbered SSBO to SSB6. For example, the first value is greater than the second value, the first value is 40 ms, and the second value is 10 ms. A terminal that does not receive the first indication information, namely, the second terminal, may determine that the PRACH cycle corresponding to the first PRACH resource is 40 ms, and a terminal that receives the first indication information, namely, the first terminal, may determine that the PRACH cycle corresponding to the second PRACH resource is 10 ms. It is assumed that the time domain length of the association period of the first PRACH resource is 2*40 ms, and the second terminal may map the seven SSBs to an RO included in the first PRACH resource. As shown in FIG. 16, in the first association period, namely, 80 ms, the terminal may map SSBO to SSB3 to one RO included in a first PRACH resource in a 1^{st} PRACH cycle (or PRACH configuration period). SSB4 to SSB6 are mapped to one RO included in a first PRACH resource in a 2^{nd} PRACH cycle (or PRACH configuration period).

In the first association period, namely, 80 ms, the first terminal may map, in the first mapping order, the seven SSBs to an RO, in an RO included in the second PRACH resource, that overlaps an RO included in the first PRACH resource, and map, in the second mapping order, the seven SSBs to an RO, in the OR included in the second PRACH resource, that does not overlap the RO included in the first PRACH resource. As shown in FIG. 16, the terminal may map SSBO to SSB3 to an RO included in a second PRACH resource in a 1^{st} second PRACH resource cycle (or PRACH configuration period of the second PRACH resource). SSB4 to SSB7 are mapped to an RO included in a second PRACH resource in a 5^{th} second resource PRACH cycle (or PRACH configuration period of the second PRACH resource). The RO in the 1^{st} second PRACH resource cycle and the RO in the 5^{th} second PRACH resource PRACH cycle are overlapped parts in the first PRACH resource and the second PRACH resource. The terminal may map SSBO to SSB3 to an RO included in a second PRACH resource in a 2^{nd} PRACH cycle (or the PRACH configuration period of the second PRACH resource). SSB4 to SSB6 are mapped to an RO included in a second PRACH resource in a 3^{rd} PRACH cycle (or PRACH configuration period of the second PRACH resource). SSBO to SSB3 are mapped to an RO included in a second PRACH resource in a 4^{th} PRACH cycle (or PRACH configuration period of the second PRACH resource). SSB4 to SSB6 are mapped to an RO included in a second PRACH resource in a 6^{th} PRACH cycle (or PRACH configuration period of the second PRACH resource). SSB0 to SSB3 are mapped to an RO included in a second PRACH resource in a 7^{th} PRACH cycle (or PRACH configuration period of the second PRACH resource), and so on.

Optionally, when a time domain length of an association period corresponding to the second PRACH resource is a second time domain length, or when an association time domain length corresponding to the first PRACH resource is a third time domain length, the terminal may map the G SSBs configured by the base station to the second PRACH resource in the first association period in two mutually independent mapping orders. Specific content is described above. The second time domain length is a product of K and a time domain length of a cycle of the second PRACH resource (a PRACH configuration period). The third time domain length is a product of K and a time domain length of a cycle of the first PRACH resource (a PRACH configuration period). Optionally, K is greater than 1.

It may be understood that, in the mapping relationship shown in FIG. 16, it can be ensured that different terminals have a consistent understanding of SSB-to-RO mapping, especially when an association period is greater than 1.

The foregoing shows a case in which the second PRACH resource is more dense in time domain than the first PRACH resource. In a possible case, the second PRACH resource may alternatively be more sparse in time domain than the first PRACH resource. In this case, similarly, the terminal may map, in the first association period, the G SSBs to the third PRACH resource in the second PRACH resource in the first mapping order, and map the G SSBs to the fourth PRACH resource in the second PRACH resource in the second mapping order.

S1104: The terminal sends a preamble on a first RO in the second PRACH resource. Correspondingly, the base station receives the preamble from the terminal.

The terminal may send the preamble on the first RO in the second PRACH resource. In a possible case, the terminal may select one or more preambles from a preamble set corresponding to the first RO for sending. The preamble set may be all preambles included in the first RO. For example, the first RO may correspond to 64 preambles, and the terminal may select one or more preambles from the 64 preambles, and send the selected one or more preambles on the first RO. Alternatively, the preamble set may be an available preamble set that is for the first RO and that is configured based on a higher-layer parameter. A set of preambles whose quantity is indicated by a higher-layer parameter totalNumberOfRA-Preambles (totalNumberOfRA-Preambles) is used as an example. The preamble set is a set including a preamble whose index is 0 to a preamble whose index is totalNumberOfRA-Preambles-1 (totalNumberOfRA-Preambles-1). The terminal may select one or more preambles from totalNumberOfRA-Preambles (totalNumberOfRA-Preambles) preambles, and send the selected one or more preambles on the first RO.

In another possible case, the base station may indicate, to the terminal, a first preamble set for sending one or more preambles on the first PRACH resource. The first preamble set is a subset of the preamble set corresponding to the first RO. The preamble set corresponding to the first RO is described above. For example, the base station may send first information to the terminal, where the first information may indicate the first preamble set. The first preamble set may include one or more preambles, and the one or more preambles included in the first preamble set may be used by the terminal for sending on the first PRACH resource.

It may be understood that the first preamble set is different from a second preamble set, and the second preamble set may be used by the terminal to send one or more preambles on the second PRACH resource. For example, the second preamble set may also include one or more preambles, and the one or more preambles included in the second preamble set may be used by the terminal for sending on the second PRACH resource. Alternatively, the second preamble set may be a preamble set corresponding to the first RO. The preamble set corresponding to the first RO is described above.

In an example, the base station may send the first information to the terminal before S703. In another example, the first information may be carried in the first signaling, for example, SIB1.

Optionally, the second preamble set is used by the terminal to send one or more preambles on a PRACH resource that is in the second PRACH resource and that does not overlap the first PRACH resource. In other words, the one or more preambles included in the first preamble set are only used by the terminal for sending on the first PRACH resource, and the one or more preambles included in the second preamble set are only used by the terminal for sending on a second PRACH resource that does not overlap the first PRACH resource.

It may be understood that the terminal in embodiments shown in FIG. 7 may meet any one or more of the following conditions: 1. The terminal has a capability of receiving the first indication information. In other words, the terminal in embodiments shown in FIG. 7 needs to be capable of receiving the first indication information, and may further parse the first indication information. 2. The terminal has a capability of parsing the first signaling. In other words, the terminal in embodiments shown in FIG. 7 needs to be capable of parsing the first signaling, to obtain the M PRACH resources indicated by the base station for the terminal, or to obtain the one or more second PRACH resources indicated by the base station for the terminal. 3. One or more second PRACH resources are configured for the terminal. In other words, the terminal can receive the first signaling and parse the first signaling, to obtain the one or more second PRACH resources indicated by the base station for the terminal.

It should be noted that a terminal that does not meet all the foregoing conditions cannot receive the first indication information, and cannot parse some content in the first signaling, for example, cannot parse the one or more second PRACH resources indicated by the first signaling. For ease of description, herein, the terminal that does not meet all the foregoing conditions may be referred to as a second terminal, and a terminal that meets any one or more of the foregoing conditions is referred to as a first terminal.

The first information of the base station may be used to configure the first preamble set for the first terminal for sending on the first PRACH resource, to avoid excessive occupation of a code domain resource of the second terminal by the first terminal, and avoid impact on network access by the second terminal. The second terminal may be understood as a terminal that can send a preamble only on the first PRACH resource. The second terminal device can send the preamble only on the first PRACH resource. Therefore, if a set of preambles used by the first terminal device on the first PRACH resource is not limited, a probability of a conflict between the first terminal device and the second terminal device during preamble selection is greatly increased. Therefore, the first information is used to configure the first terminal device to use the preambles in the first preamble set only on the first PRACH resource, so that occupation of a preamble resource of the second terminal device can be reduced. In addition, because the first terminal device may use the second PRACH resource, and there is no second terminal on the second PRACH resource, a preamble used by the first terminal on the second PRACH resource may not be limited, that is, the first terminal uses a preamble in the second preamble set on the second PRACH resource, where the second preamble set is different from the first preamble set. Because the first terminal device may use the second PRACH resource, a code domain resource of the first terminal is not limited because the first information is used to configure the first preamble set.

Optionally, in embodiments shown in FIG. 7, the base station may further send second information to the terminal. The second information may indicate the foregoing second preamble set. For example, the base station may send the second information to the terminal before S703. For another example, the second information may be carried in the first signaling, for example, SIB1.

In a possible case, after receiving the second information, the terminal in embodiments shown in FIG. 7 receives the first indication information. In other words, after the base station indicates the third preamble set sent on the second PRACH resource, the terminal may receive the first indication information, to determine the N PRACH resources.

Based on embodiments shown in FIG. 11, on the basis that the first signaling indicates the first PRACH resource, the first indication information dynamically indicates an adjustment of a first parameter of a PRACH resource, and indicates the second PRACH resource to the terminal. Therefore, a quantity of times that the base station sends system information can be reduced, and energy consumption of the base station is reduced. In addition, the base station may indicate two PRACH resources with different first parameters, and dynamically indicate, via the first indication information, a PRACH resource to the terminal for random access. In comparison with a technical solution in which a base station does not send system information for a long time, this can reduce a delay in network access by the terminal.

The following describes a communication apparatus for implementing the foregoing method in embodiments of this application with reference to the accompanying drawings. Therefore, all the foregoing content may be used in the following embodiments. Repeated content is not described again.

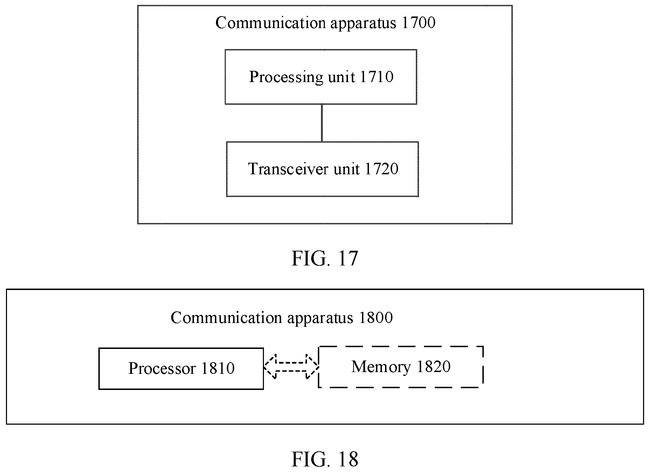

FIG. 17 is a block diagram of a communication apparatus 1700 according to an embodiment of this application. The communication apparatus 1700 may correspondingly implement functions or steps implemented by the terminal device or the network device in the foregoing method embodiments. The communication apparatus may include a processing unit 1710 and a transceiver unit 1720. Optionally, a storage unit may be further included. The storage unit may be configured to store instructions (code or a program) and/or data. The processing unit 1710 and the transceiver unit 1720 may be coupled to the storage unit. For example, the processing unit 1710 may read the instructions (the code or the program) and/or the data in the storage unit, to implement a corresponding method. The foregoing units may be independently disposed, or may be partially or completely integrated.

In some possible implementations, the communication apparatus 1700 can correspondingly implement the behavior and the function of the terminal device in the foregoing method embodiments. For example, the communication apparatus 1700 may be the terminal device, or may be a component (for example, a chip or a circuit) used in the terminal device. The transceiver unit 1720 may be configured to perform all receiving or sending operations performed by the terminal device in embodiments shown in FIG. 7, for example, S701, S702, or S703 in embodiments shown in FIG. 7, and/or configured to support another process of the technology described in this specification. The processing unit 1710 is configured to perform all operations performed by the terminal device in embodiments shown in FIG. 7 except receiving and sending operations, and/or configured to support another process of the technology described in this specification.

For example, the transceiver unit 1720 is configured to receive first signaling, where the first signaling indicates M PRACH resources. The transceiver unit 1720 is further configured to receive first indication information, where the first indication information indicates N PRACH resources in the M PRACH resources, M is an integer greater than 1, and N is a positive integer less than or equal to M. The processing unit 1710 is configured to determine the N PRACH resources based on the first indication information. The transceiver unit 1720 is further configured to send a preamble on a first RO in the N PRACH resources, or send a preamble on a first RO in (M-N) PRACH resources.

In a possible implementation, the transceiver unit 1720 is further configured to receive first information, where the first information indicates a first preamble set. The first preamble set is used by a first terminal device to send one or more preambles on a first PRACH resource, the first preamble set is different from a second preamble set, and the second preamble set is used by the first terminal device to send one or more preambles on a second PRACH resource.

In a possible implementation, the transceiver unit 1720 is further configured to receive third information, where the third information indicates a resource for carrying the first indication information.

In a possible implementation, the transceiver unit 1720 is further configured to receive fourth information, where the fourth information indicates a quantity of repetition times of the first indication information.

In some possible implementations, the communication apparatus 1700 can correspondingly implement the behavior and the function of the terminal device in the foregoing method embodiments. For example, the communication apparatus 1700 may be the terminal device, or may be a component (for example, a chip or a circuit) used in the terminal device. The transceiver unit 1720 may be configured to perform all receiving or sending operations performed by the terminal device in embodiments shown in FIG. 11, for example, S1101 or S1102 in embodiments shown in FIG. 11, and/or configured to support another process of the technology described in this specification. The processing unit 1710 is configured to perform all operations performed by the terminal device in embodiments shown in FIG. 11 except receiving and sending operations, for example, S1103 in embodiments shown in FIG. 11, and/or another process used to support the technology described in this specification.

For example, the transceiver unit 1720 is configured to receive first signaling, where the first signaling indicates a first PRACH resource, the first PRACH resource includes a plurality of parameters, and the plurality of parameters include a first value of a first parameter. The transceiver unit 1720 is further configured to receive first indication information, where the first indication information indicates a second value of the first parameter. The processing unit 1710 is configured to determine a second PRACH resource based on the first PRACH resource and the second value of the first parameter. The transceiver unit 1720 is further configured to send a preamble on a first RO in the second PRACH resource.

In a possible implementation, the processing unit 1710 is further configured to determine G SSBs, where G is an integer greater than or equal to 1. The processing unit 1710 is further configured to map the G SSBs to a third PRACH resource in a first association period in a first mapping order. The processing unit 1710 is further configured to map the G SSBs to a fourth PRACH resource in the first association period in a second mapping order. The third PRACH resource and the fourth PRACH resource belong to the second PRACH resource, and the third PRACH resource and the fourth PRACH resource do not overlap. The first association period is an association period corresponding to the first PRACH resource.

In a possible implementation, the transceiver unit 1720 is further configured to receive first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

In some possible implementations, the communication apparatus 1700 can correspondingly implement the behavior and the function of the network device in the foregoing method embodiments. For example, the communication apparatus 1700 may be a network device, or may be a component (for example, a chip or a circuit) used in the network device. The transceiver unit 1720 may be configured to perform all receiving or sending operations performed by the network device in embodiments shown in FIG. 7, for example, S701, S702, and S703 in embodiments shown in FIG. 7, and/or configured to support another process of the technology described in this specification. The processing unit 1710 is configured to perform all operations performed by the network device in embodiments shown in FIG. 7 except receiving and sending operations, and/or configured to support another process of the technology described in this specification.

For example, the transceiver unit 1720 is configured to send first signaling, where the first signaling indicates M physical random access channel PRACH resources. The processing unit 1710 is configured to determine N PRACH resources. The transceiver unit 1720 is further configured to send first indication information, where the first indication information indicates the N PRACH resources in the M PRACH resources, M is an integer greater than 1, and N is a positive integer less than or equal to M. The transceiver unit 1720 is further configured to receive a preamble on a first RO in the N PRACH resources, or receive a preamble on a first RO in (M-N) PRACH resources.

In a possible implementation, the transceiver unit 1720 is further configured to send first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on the second PRACH resources.

In a possible implementation, the transceiver unit 1720 is further configured to send third information, where the third information indicates a resource for carrying the first indication information.

In a possible implementation, the transceiver unit 1720 is further configured to send fourth information, where the fourth information indicates a quantity of repetition times of the first indication information.

In some possible implementations, the communication apparatus 1700 can correspondingly implement the behavior and the function of the network device in the foregoing method embodiments. For example, the communication apparatus 1700 may be a network device, or may be a component (for example, a chip or a circuit) used in the network device. The transceiver unit 1720 may be configured to perform all receiving or sending operations performed by the network device in embodiments shown in FIG. 11, for example, S1101 and S1102 in embodiments shown in FIG. 11, and/or configured to support another process of the technology described in this specification. The processing unit 1710 is configured to perform all operations performed by the network device in embodiments shown in FIG. 11 except receiving and sending operations, and/or configured to support another process of the technology described in this specification.

For example, the transceiver unit 1720 is configured to send first signaling, where the first signaling indicates a first PRACH resource, the first PRACH resource includes a plurality of parameters, and the plurality of parameters include a first value of a first parameter. The transceiver unit 1720 is further configured to send first indication information, where the first indication information indicates a second value of the first parameter. The processing unit 1710 is configured to determine a second PRACH resource based on the first PRACH resource and the second value of the first parameter. The transceiver unit 1720 is further configured to send a preamble on a first RO in the second PRACH resource.

In a possible implementation, the transceiver unit 1720 is further configured to send first information, where the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

For operations performed by the processing unit 1710 and the transceiver unit 1720, refer to the related descriptions in the foregoing method embodiments.

It should be understood that the processing unit 1710 in embodiments of this application may be implemented by a processor or a processor-related circuit component, and the transceiver unit 1720 may be implemented by a transceiver, a transceiver-related circuit component, or a communication interface.

Based on a same concept, as shown in FIG. 18, an embodiment of this application provides a communication apparatus 1800. The communication apparatus 1800 includes a processor 1810. Optionally, the communication apparatus 1800 may further include a memory 1820, configured to store instructions executed by the processor 1810, store input data required by the processor 1810 to run instructions, or store data generated after the processor 1810 runs instructions. The processor 1810 may implement the methods shown in the foregoing method embodiments by using the instructions stored in the memory 1820.

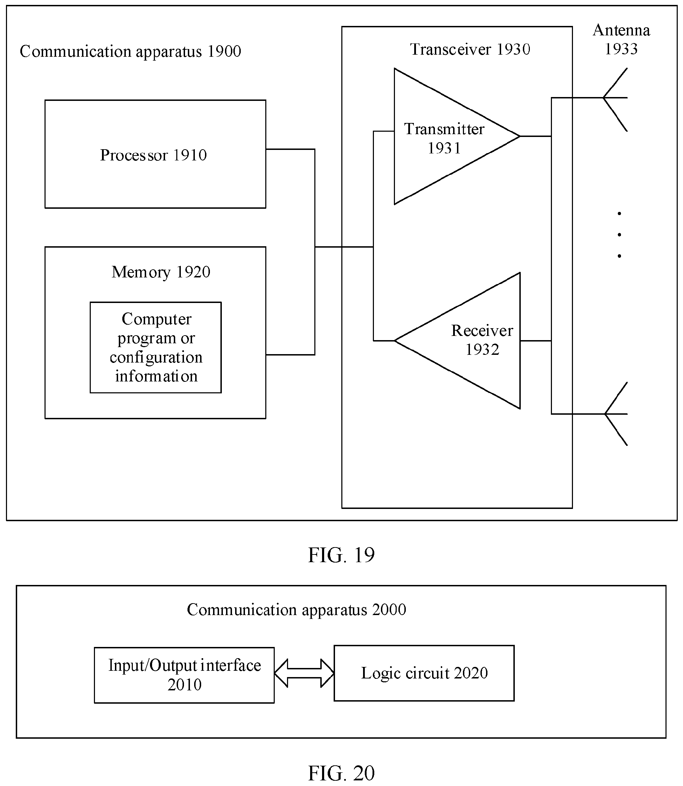

Based on a same concept, as shown in FIG. 19, an embodiment of this application provides a communication apparatus 1900. The communication apparatus 1900 may be a chip or a chip system. Optionally, in this embodiment of this application, the chip system may include a chip, or may include a chip and another discrete device.

The communication apparatus 1900 may include at least one processor 1910. The processor 1910 is coupled to a memory. Optionally, the memory may be located inside the apparatus, or may be located outside the apparatus. For example, the communication apparatus 1900 may further include at least one memory 1920. The memory 1920 stores a necessary computer program, configuration information, a computer program or instructions, and/or data for implementing any one of the foregoing embodiments. The processor 1910 may execute the computer program stored in the memory 1920, to complete the method in any one of the foregoing embodiments.

The coupling in this embodiment of this application may be an indirect coupling or a communication connection between apparatuses, units, or modules in an electrical form, a mechanical form, or another form, and is used for information exchange between the apparatuses, the units, or the modules. The processor 1910 may operate in cooperation with the memory 1920. **In** this embodiment of this application, a specific connection medium between a transceiver 1930, the processor 1910, and the memory 1920 is not limited.

The communication apparatus 1900 may further include the transceiver 1930, and the communication apparatus 1900 may exchange information with another device via the transceiver 1930. The transceiver 1930 may be a circuit, a bus, a transceiver, or any other apparatus that may be configured to exchange information, or is referred to as a signal transceiver unit. As shown in FIG. 19, the transceiver 1930 includes a transmitter 1931, a receiver 1932, and an antenna 1933. In addition, when the communication apparatus 1900 is a chip-type apparatus or a circuit, the transceiver in the communication apparatus 1900 may alternatively be an input/output circuit and/or a communication interface, and may input data (or referred to as "receive data") and output data (or referred to as "send data"). The processor is an integrated processor, a microprocessor, or an integrated circuit, and the processor may determine output data based on input data.

In a possible implementation, the communication apparatus 1900 may be used in a terminal device. Specifically, the communication apparatus 1900 may be a terminal device, or may be an apparatus that can support a terminal device in implementing functions of the terminal device in any one of the foregoing embodiments. The memory 1920 stores a necessary computer program, a computer program or instructions, and/or data for implementing functions of the terminal device in any one of the foregoing embodiments. The processor 1910 may execute the computer program stored in the memory 1920, to complete the method performed by the terminal device in any one of the foregoing embodiments.

In a possible implementation, the communication apparatus 1900 may be used in a network device. Specifically, the communication apparatus 1900 may be the network device, or may be an apparatus that can support the network device in implementing functions of the network device in any one of the foregoing embodiments. The memory 1920 stores a necessary computer program, a computer program or instructions, and/or data for implementing functions of the network device in any one of the foregoing embodiments. The processor 1910 may execute the computer program stored in the memory 1920, to complete the method performed by the network device in any one of the foregoing embodiments.

The communication apparatus 1900 provided in this embodiment may be used in a terminal device to complete the method performed by the terminal device, or may be used in a network device to complete the method performed by the network device. Therefore, for technical effect that can be achieved by this embodiment, refer to the foregoing method embodiments. Details are not described herein again.

In embodiments of this application, the processor may be a general-purpose processor, a digital signal processor, an application-specific integrated circuit, a field programmable gate array or another programmable logic device, a discrete gate or a transistor logic device, or a discrete hardware component, and may implement or perform the methods, steps, and logical block diagrams disclosed in embodiments of this application. The general-purpose processor may be a microprocessor or any conventional processor or the like. The steps of the methods disclosed with reference to embodiments of this application may be directly performed by a hardware processor, or may be performed by using a combination of hardware in the processor and a software module. In embodiments of this application, the memory may be a nonvolatile memory, for example, a hard disk drive (hard disk drive, HDD) or a solid-state drive (solid-state drive, SSD), or may be a volatile memory (volatile memory), for example, a random access memory (random access memory, RAM). The memory may alternatively be any other medium that can be used to carry or store expected program code in a form of an instruction or a data structure and that can be accessed by a computer, but is not limited thereto. The memory in embodiments of this application may alternatively be a circuit or any other apparatus that can implement a storage function, and is configured to store a computer program, a computer program or instructions, and/or data.

Refer to FIG. 20. Based on the foregoing embodiments, an embodiment of this application further provides another communication apparatus 2000, including an input/output interface 2010 and a logic circuit 2020. The input/output interface 2010 is configured to receive code instructions and transmit the code instructions to the logic circuit 2020. The logic circuit 2020 is configured to execute the code instructions to perform the method performed by the terminal device or the network device in any one of the foregoing embodiments.

The following describes in detail an operation performed by the communication apparatus used in a terminal device or a network device.

In an optional implementation, the communication apparatus 2000 may be used in the terminal device, to perform the method performed by the terminal device, specifically, for example, the method performed by the terminal device in embodiments shown in FIG. 7 or FIG. 11.

The input/output interface 2010 is configured to input first signaling, where the first signaling indicates M PRACH resources. The input/output interface 2010 is further configured to input first indication information, where the first indication information indicates N PRACH resources in the M PRACH resources, M is an integer greater than 1, and N is a positive integer less than or equal to M. The logic circuit 2020 is configured to determine the N PRACH resources based on the first indication information. The input/output interface 2010 is further configured to output a preamble on a first RO in the N PRACH resources, or output a preamble on a first RO in (M-N) PRACH resources.

The input/output interface 2010 is configured to input first signaling, where the first signaling indicates a first PRACH resource, the first PRACH resource includes a plurality of parameters, and the plurality of parameters include a first value of a first parameter. The input/output interface 2010 is further configured to input first indication information, where the first indication information indicates a second value of the first parameter. The logic circuit 2020 is configured to determine a second PRACH resource based on the first PRACH resource and the second value of the first parameter. The input/output interface 2010 is further configured to output a preamble on a first RO in the second PRACH resource.

The communication apparatus 2000 provided in this embodiment may be used in a terminal device to complete the method performed by the terminal device. Therefore, for technical effect that can be achieved by this embodiment, refer to the foregoing method embodiments. Details are not described herein again.

In an optional implementation, the communication apparatus 2000 may be used in the network device, to perform the method performed by the network device, specifically, for example, the method performed by the network device in embodiments shown in FIG. 7 or FIG. 11.

The input/output interface 2010 is configured to output first signaling, where the first signaling indicates M physical random access channel PRACH resources. The logic circuit 2020 is configured to determine N PRACH resources. The input/output interface 2010 is further configured to output first indication information, where the first indication information indicates the N PRACH resources in the M PRACH resources, M is an integer greater than 1, and N is a positive integer less than or equal to M. The input/output interface 2010 is further configured to input a preamble on a first RO in the N PRACH resources, or input a preamble on a first RO in (M-N) PRACH resources.

The input/output interface 2010 is configured to output first signaling, where the first signaling indicates a first PRACH resource, the first PRACH resource includes a plurality of parameters, and the plurality of parameters include a first value of a first parameter. The input/output interface 2010 is further configured to output first indication information, where the first indication information indicates a second value of the first parameter. The logic circuit 2020 is configured to determine a second PRACH resource based on the first PRACH resource and the second value of the first parameter. The input/output interface 2010 is further configured to input a preamble on a first RO in the second PRACH resource.

The communication apparatus 2000 provided in this embodiment may be used in a network device to complete the method performed by the network device. Therefore, for technical effect that can be achieved by this embodiment, refer to the foregoing method embodiments. Details are not described herein again.

Based on the foregoing embodiments, an embodiment of this application further provides a communication system. The communication system includes at least one communication apparatus used in a terminal device and at least one communication apparatus used in a network device. For technical effect that can be achieved by this embodiment, refer to the foregoing method embodiments. Details are not described herein again.

Based on the foregoing embodiments, an embodiment of this application further provides a computer-readable storage medium. The computer-readable storage medium stores a computer program or instructions. When the instructions are executed, the method performed by the terminal device or the method performed by the network device in any one of the foregoing embodiments is implemented. The computer-readable storage medium may include any medium that can store program code, for example, a USB flash drive, a removable hard disk drive, a read-only memory, a random access memory, a magnetic disk, or an optical disc.

To implement the functions of the communication apparatuses in FIG. 17 to FIG. 20, an embodiment of this application further provides a chip, including a processor, configured to support the communication apparatus in implementing the functions of the terminal device or the network device in the foregoing method embodiments. In a possible design, the chip is connected to a memory, or the chip includes a memory. The memory is configured to store a computer program or instructions and data that are necessary for the communication apparatus.

A person skilled in the art should understand that embodiments of this application may be provided as a method, a system, or a computer program product. Therefore, this application may use a form of a hardware-only embodiment, a software-only embodiment, or an embodiment with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to embodiments of this application. It should be understood that a computer program or instructions may be used to implement each procedure and/or each block in the flowcharts and/or the block diagrams and a combination of a procedure and/or a block in the flowcharts and/or the block diagrams. The computer program or the instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specified function in one or more procedures in the flowcharts and/or in one or more blocks in the block diagrams. The computer program or the instructions may alternatively be stored in a computer-readable memory that can indicate the computer or the another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

The computer program or the instructions may alternatively be loaded onto the computer or the another programmable data processing device, so that a series of operation steps are performed on the computer or the another programmable device to generate computer-implemented processing. Therefore, the instructions executed on the computer or the another programmable device provide steps for implementing a specified function in one or more procedures in the flowcharts and/or in one or more blocks in the block diagrams.

It is clear that a person skilled in the art can make various modifications and variations to embodiments of this application without departing from the scope of embodiments of this application. In this way, this application is intended to cover these modifications and variations of embodiments of this application provided that they fall within the scope of protection defined by the following claims and their equivalent technologies.

## Claims

1. A resource indication method, comprising:
receiving first signaling, wherein the first signaling indicates M physical random access channel PRACH resources;
receiving first indication information, wherein the first indication information indicates N PRACH resources in the M PRACH resources, M is an integer greater than 1, and N is a positive integer less than or equal to M; and
sending a preamble on a first RO in the N PRACH resources, or sending a preamble on a first RO in (M-N) PRACH resources.

2. The method according to claim 1, wherein the M PRACH resources comprise a first PRACH resource and one or more second PRACH resources;
the first indication information indicates the N PRACH resources in the first PRACH resource and the one or more second PRACH resources, and N is 1; and
the first RO is one of ROs comprised in the N PRACH resources.

3. The method according to claim 1, wherein the M PRACH resources comprise a first PRACH resource and one or more second PRACH resources;
the first indication information indicates to activate a third PRACH resource in the one or
more second PRACH resources, and the N PRACH resources are the third PRACH resource and the first PRACH resource; and
the first RO is one of an RO comprised in the third PRACH resource and an RO comprised in the first PRACH resource.

4. The method according to claim 1, wherein the N first PRACH resources and one or more second PRACH resources;
the first indication information indicates to deactivate the one or more second PRACH resources, and the N PRACH resources are the one or more second PRACH resources; and
the first RO is one of one or more ROs comprised in the first PRACH resource.

5. The method according to any one of claims 1 to 4, further comprising:
receiving first information, wherein the first information indicates a first preamble set, the first preamble set is used by a first terminal device to send one or more preambles on the first PRACH resource, the first preamble set is different from a second preamble set, and the second preamble set is used by the first terminal device to send one or more preambles on the second PRACH resources.

6. The method according to claim 5, wherein the second preamble set is used by the first terminal device to send one or more preambles on a PRACH resource that is in the second PRACH resources and that does not overlap the first PRACH resource.

7. The method according to claim 5 or 6, wherein the first terminal device meets any one or more of the following conditions:
the first terminal device has a capability of receiving the first indication information;
the first terminal device has a capability of parsing the first signaling; and
one or more second PRACH resources are configured for the first terminal device.

8. The method according to any one of claims 1 to 7, wherein configuration information of the first indication information is carried in the first signaling.

9. A resource indication method, comprising:
receiving first signaling, wherein the first signaling indicates a first PRACH resource, the first PRACH resource comprises a plurality of parameters, and the plurality of parameters comprise a first value of a first parameter;
receiving first indication information, wherein the first indication information indicates a second value of the first parameter;
determining a second PRACH resource based on the first PRACH resource and the second value of the first parameter; and
sending a preamble on a first RO in the second PRACH resource.

10. The method according to claim 9, wherein the first RO is one of one or more ROs comprised in the second PRACH resource.

11. The method according to claim 9 or 10, wherein the first parameter comprises a cycle.

12. The method according to any one of claims 9 to 11, wherein the second value is not greater than the first value.

13. The method according to any one of claims 9 to 12, wherein a value of an association period (association period) of the first PRACH resource is 1, and a value of an association period (association period) of the second PRACH resource is 1.

14. The method according to claim 13, further comprising:
determining G SSBs, wherein G is an integer greater than or equal to 1;
mapping the G SSBs to a third PRACH resource in a first association period in a first mapping order; and
mapping the G SSBs to a fourth PRACH resource in the first association period in a second mapping order, wherein
the third PRACH resource and the fourth PRACH resource belong to the second PRACH resource, and the third PRACH resource and the fourth PRACH resource do not overlap; and
the first association period is the association period corresponding to the first PRACH resource.

15. The method according to claim 14, wherein the third PRACH resource is an overlapped resource in the first PRACH resource and the second PRACH resource, and the fourth PRACH resource is a resource other than the third PRACH resource in the second PRACH resource.

16. The method according to any one of claims 9 to 14, further comprising:
receiving first information, wherein the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

17. The method according to claim 16, wherein the first terminal device meets any one or more of the following conditions:
the first terminal device has a capability of receiving the first indication information;
the first terminal device has a capability of parsing the first signaling; and
one or more second PRACH resources are configured for the first terminal device.

18. A resource indication method, comprising:
sending first signaling, wherein the first signaling indicates M physical random access channel PRACH resources;
sending first indication information, wherein the first indication information indicates N PRACH resources in the M PRACH resources, M is an integer greater than 1, and N is a positive integer less than or equal to M; and
receiving a preamble on a first RO in the N PRACH resources, or receiving a preamble on a first RO in (M-N) PRACH resources.

19. The method according to claim 18, wherein the M PRACH resources comprise a first PRACH resource and one or more second PRACH resources;
the first indication information indicates the N PRACH resources in the first PRACH resource and the one or more second PRACH resources, and N is 1; and
the first RO is one of ROs comprised in the N PRACH resources.

20. The method according to claim 18, wherein the M PRACH resources comprise a first PRACH resource and one or more second PRACH resources;
the first indication information indicates to activate a third PRACH resource in the one or
more second PRACH resources, and the N PRACH resources are the third PRACH resource and the first PRACH resource; and
the first RO is one of an RO comprised in the third PRACH resource and an RO comprised in the first PRACH resource.

21. The method according to claim 18, wherein the N first PRACH resources and one or more second PRACH resources;
the first indication information indicates to deactivate the one or more second PRACH resources, and the N PRACH resources are the one or more second PRACH resources; and
the first RO is one of one or more ROs comprised in the first PRACH resource.

22. The method according to any one of claims 18 to 21, further comprising:
sending first information, wherein the first information indicates a first preamble set, the first preamble set is used by a first terminal device to send one or more preambles on the first PRACH resource, the first preamble set is different from a second preamble set, and the second preamble set is used by the first terminal device to send one or more preambles on the second PRACH resources.

23. The method according to claim 22, wherein the second preamble set is used by the first terminal device to send one or more preambles on a PRACH resource that is in the second PRACH resources and that does not overlap the first PRACH resource.

24. The method according to claim 22 or 23, wherein the first terminal device meets any one or more of the following conditions:
the first terminal device has a capability of receiving the first indication information;
the first terminal device has a capability of parsing the first signaling; and
one or more second PRACH resources are configured for the first terminal device.

25. The method according to any one of claims 18 to 24, wherein configuration information of the first indication information is carried in the first signaling.

26. A resource indication method, comprising:
sending first signaling, wherein the first signaling indicates a first PRACH resource, the first PRACH resource comprises a plurality of parameters, and the plurality of parameters comprise a first value of a first parameter;
sending first indication information, wherein the first indication information indicates a second value of the first parameter; and
receiving a preamble on a first RO in the second PRACH resource.

27. The method according to claim 26, wherein the first RO is one of one or more ROs comprised in the second PRACH resource.

28. The method according to claim 26 or 27, wherein the first parameter comprises a cycle.

29. The method according to any one of claims 26 to 28, wherein the second value is not greater than the first value.

30. The method according to any one of claims 26 to 29, wherein a value of an association period (association period) of the first PRACH resource is 1, and a value of an association period (association period) of the second PRACH resource is 1.

31. The method according to any one of claims 26 to 30, further comprising:
sending first information, wherein the first information indicates a first preamble set, the first preamble set is used by a first terminal device to send one or more preambles on the first PRACH resource, the first preamble set is different from a second preamble set, and the second preamble set is used by the first terminal device to send one or more preambles on a PRACH resource that is in the second PRACH resource and that does not overlap the first PRACH resource.

32. The method according to claim 31, wherein the first terminal device meets any one or more of the following conditions:
the first terminal device has a capability of receiving the first indication information;
the first terminal device has a capability of parsing the first signaling; and
one or more second PRACH resources are configured for the first terminal device.

33. A communication apparatus, comprising a module configured to perform the method according to any one of claims 1 to 8, or comprising a module configured to perform the method according to any one of claims 9 to 17.

34. A communication apparatus, comprising a module configured to perform the method according to any one of claims 18 to 25, or comprising a module configured to perform the method according to any one of claims 26 to 32.

35. A communication apparatus, comprising a processor and an interface circuit, wherein the interface circuit is configured to receive a signal from a communication apparatus other than the communication apparatus and transmit the signal to the processor, or transmit a signal from the processor to a communication apparatus other than the communication apparatus, and the processor is configured to implement the method according to any one of claims 1 to 8 through a logic circuit or by executing code instructions, the processor is configured to implement the method according to any one of claims 9 to 17 through a logic circuit or by executing code instructions, the processor is configured to implement the method according to any one of claims 18 to 25 through a logic circuit or by executing code instructions, or the processor is configured to implement the method according to any one of claims 26 to 32 through a logic circuit or by executing code instructions.

36. A computer-readable storage medium, wherein the storage medium stores instructions, and when the instructions are executed by a communication apparatus, the method according to any one of claims 1 to 8, the method according to any one of claims 9 to 17, the method according to any one of claims 18 to 25, or the method according to any one of claims 26 to 32 is implemented.

37. A communication apparatus, comprising a processor, wherein the processor is coupled to a memory, the memory is configured to store instructions, and when the instructions are executed by the processor, the communication apparatus is enabled to perform the method according to any one of claims 1 to 8, the communication apparatus is enabled to perform the method according to any one of claims 9 to 17, the communication apparatus is enabled to perform the method according to any one of claims 18 to 25, or the communication apparatus is enabled to perform the method according to any one of claims 26 to 32.

38. A computer program product, wherein when the computer program product runs on a computer, the computer is enabled to perform the method according to any one of claims 1 to 8, the computer is enabled to perform the method according to any one of claims 9 to 17, the computer is enabled to perform the method according to any one of claims 18 to 25, or the computer is enabled to perform the method according to any one of claims 26 to 32.

39. A communication system, comprising at least one communication apparatus according to claim 33 and at least one communication apparatus according to claim 34.
